(19) Europäisches Patentamt
European Patent Office
Office européen des brevets

(11) EP 2 092 377 B1

(12) **FASCICULE DE BREVET EUROPEEN**

(45) Date de publication et mention de la délivrance du brevet:
**08.02.2012 Bulletin 2012/06**

(21) Numéro de dépôt: **07866538.7**

(22) Date de dépôt: **22.11.2007**

(51) Int Cl.:
***G02B 1/10*** *(2006.01)* ***G02B 1/04*** *(2006.01)*

(86) Numéro de dépôt international:
**PCT/FR2007/052383**

(87) Numéro de publication internationale:
**WO 2008/062142 (29.05.2008 Gazette 2008/22)**

(54) **ARTICLE D'OPTIQUE COMPORTANT UN REVETEMENT ANTI-ABRASION ET ANTI-RAYURES BICOUCHE, ET PROCEDE DE FABRICATION**

OPTISCHER ARTIKEL MIT DOPPELSCHICHTIGER SCHEUER- UND KRATZFESTER BESCHICHTUNG SOWIE HERSTELLUNGSVERFAHREN DAFÜR

OPTICAL ARTICLE COMPRISING A DOUBLE-LAYER ABRASION AND SCRATCH RESISTANT COATING AND METHOD FOR PRODUCTION THEREOF

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **23.11.2006 FR 0655085**

(43) Date de publication de la demande:
**26.08.2009 Bulletin 2009/35**

(73) Titulaire: **ESSILOR INTERNATIONAL (Compagnie Générale d'Optique)**
**94220 Charenton le Pont (FR)**

(72) Inventeurs:
- **BERIT-DEBAT, Fabien**
  **94220 Charenton-le-Pont (FR)**
- **BOVET, Christian**
  **94220 Charenton-le-pont (FR)**
- **CANO, Jean-Paul**
  **94220 Charenton-le-pont (FR)**
- **KUDLA, Amélie**
  **94220 Charenton-le-pont (FR)**
- **LECLAIRE, Yves**
  **94220 Charenton-le-pont (FR)**

(74) Mandataire: **Catherine, Alain et al**
**Cabinet HARLE et PHELIP**
**14-16, rue Ballu**
**75009 Paris (FR)**

(56) Documents cités:
**EP-A1- 0 614 957**
**WO-A-96/00403**
**US-A1- 2002 034 630**
**US-B1- 6 489 028**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 2 092 377 B1

## Description

La présente invention concerne un article d'optique, tel qu'une lentille ophtalmique en verre organique, revêtu d'un revêtement bicouche à base notamment de compositions polysiloxanes thermodurcissables lui conférant simultanément des performances en termes de résistance à l'abrasion et aux rayures proches de celles du verre minéral, et un procédé de fabrication de cet article d'optique.

Les lentilles ophtalmiques en matériau organique transparent, ou verre organique, plus léger que le verre minéral, sont maintenant d'un usage très répandu. Les verres organiques présentent cependant l'inconvénient d'être plus sensibles aux rayures et à l'abrasion que ne le sont les verres minéraux classiques.

Il est classique de revêtir une lentille ophtalmique de divers revêtements afin de conférer à cette lentille des propriétés mécaniques et/ou optiques améliorées. Ainsi, classiquement, on forme sur une lentille ophtalmique successivement des revêtements tels que des revêtements anti-chocs, anti-abrasion et/ou anti-rayures et anti-reflets.

Les revêtements anti-abrasion et/ou anti-rayures utilisés pour protéger la surface des verres organiques sont généralement des revêtements durs monocouches de nature poly(méth)acrylique ou à base d'hydrolysats de silanes.

Une technique connue pour former des revêtements anti-abrasion consiste à polymériser des alcoxysilanes en présence de catalyseurs de durcissement tels que des dérivés de l'aluminium. A titre d'exemple de littérature portant sur cette technique, on peut citer le brevet US 4211823, décrivant des compositions renfermant un hydrolysat d'un silane possédant un groupement époxy et pas moins de deux groupements alcoxy directement liés à l'atome de silicium, de fines particules de silice, certains chélates d'aluminium, dans un milieu solvant renfermant plus de 1 % en masse d'eau, et qui sont utilisés pour revêtir des substrats en matière plastique.

Le brevet US 5916669 décrit un revêtement bicouche dont la couche supérieure, de nature poly(uréthane-acrylate) est une couche dure, plus fragile que la couche inférieure, qui elle est une couche plus souple de nature acrylate. La couche supérieure est une couche conférant une protection contre les rayures, alors que la couche inférieure permet d'augmenter la résistance à l'abrasion de la couche supérieure sans nuire aux propriétés de résistance aux rayures de celle-ci. Le brevet indique que la combinaison de ces deux couches permet d'obtenir simultanément une bonne résistance à l'abrasion et aux rayures.

Les brevets US 5254395 et US 5114783 décrivent également des revêtements anti-abrasion et anti-rayures bicouches, comprenant une couche supérieure dure à base d'un copolymère acrylique hautement réticulé, adhérant à une couche inférieure souple formée à partir d'un mélange d'un copolymère uréthane-acrylate aliphatique réticulé et d'une plus faible proportion d'un monomère acrylique multifonctionnel.

Le brevet US 6808812 décrit une composition de revêtement anti-abrasion ou anti-rayures, comprenant le produit de la réaction entre l'acide oxalique et un dérivé organométallique, de préférence un titanate tel que le tétra-isopropoxytitane, un époxyalcoxysilane tel que le γ-glycidoxypropyltriméthoxysilane (GLYMO) et optionnellement un second alcoxysilane tel que le diméthyldiéthoxysilane (DMDES).

Selon un mode de réalisation décrit dans ce brevet, cette composition peut être déposée sur un substrat déjà revêtu d'un revêtement anti-abrasion de nature (méth)acrylique ou polysiloxane, par exemple à base d'un hydrolysat d'époxyalcoxysilane et de silice colloïdale. Un tel revêtement bicouche présente une combinaison d'excellentes propriétés de résistance à l'abrasion et aux rayures.

Le brevet FR 2721720 divulgue un revêtement bicouche comprenant une couche supérieure de primaire anti-chocs de nature polysiloxane (méthyl-GLYMO ou GLYMO) et une couche inférieure anti-abrasion également de nature polysiloxane, comprenant une matrice de méthyl-GLYMO (γ-glycidoxypropylméthyldiméthoxysilane) dans laquelle est dispersée de la silice colloïdale.

Il est souhaitable d'améliorer les propriétés anti-rayures de ces revêtements.

La présente invention a donc pour objectif de fournir un article d'optique transparent, notamment une lentille ophtalmique, comprenant un substrat en verre minéral ou organique et un revêtement lui conférant des propriétés de résistance aux rayures et à l'abrasion significativement améliorées, l'obtention de l'une de ces deux propriétés ne devant pas se faire au détriment de l'autre, et ceci même lorsque ledit revêtement est associé à un revêtement anti-reflets.

La présente invention a également pour objectif de fournir un revêtement anti-rayures et anti-abrasion tel que ci-dessus, qui ne fragilise pas le substrat sur lequel il est appliqué.Le revêtement anti-rayures et anti-abrasion doit posséder la transparence requise pour l'application au domaine optique et présenter une bonne adhérence aux substrats, notamment ceux en matériau organique. En outre, les couches le composant doivent présenter une bonne adhérence les unes aux autres.

Un autre objectif de l'invention est de fournir un procédé de préparation de tels articles d'optique, qui s'intègre aisément dans le processus classique de fabrication des articles d'optique.

Les buts fixés ci-dessus sont atteints selon l'invention par un article d'optique comprenant un substrat ayant au moins une surface principale revêtue d'un revêtement anti-abrasion et anti-rayures, ledit revêtement étant composé, en partant du substrat, d'une couche inférieure et d'une couche supérieure adhérant entre elles, la couche supérieure étant une couche de composition de couche supérieure durcie et la couche inférieure étant une couche de composition

de couche inférieure durcie, ladite composition de couche supérieure comprenant :

- au moins un composé organosilane, ou hydrolysat de celui-ci, de formule :

$$R_nY_mSi(X)_{4-n-m} \qquad (I)$$

dans laquelle les groupes R, identiques ou différents, sont des groupes organiques monovalents liés au silicium par un atome de carbone et contenant au moins une fonction époxy, les groupes X, identiques ou différents, sont des groupes hydrolysables, Y est un groupe organique monovalent lié au silicium par un atome de carbone, n et m étant des entiers tels que n = 1 ou 2 avec n+m = 1 ou 2, et
- au moins un composé, ou hydrolysat de celui-ci, de formule:

$$M(Z)_x \qquad (II)$$

dans laquelle M désigne un métal ou un métalloïde, les groupes Z, identiques ou différents, sont des groupes hydrolysables et x, égal ou supérieur à 4, est la valence du métal ou métalloïde M, le ratio :

$$Rs = \frac{\textit{masse de l' extrait sec théorique en composés I dans la composition de couche supérieure}}{\textit{masse de l' extrait sec théorique en composés II dans la composition de couche supérieure}}$$

étant inférieur ou égal à 2,3, et ladite composition de couche inférieure comprenant:
- au moins un composé organosilane, ou hydrolysat de celui-ci, de formule :

$$R'_{n'}Y'_{m'}Si(X')_{4-n'-m'} \qquad (III)$$

dans laquelle les groupes R', identiques ou différents, sont des groupes organiques monovalents liés au silicium par un atome de carbone et contenant au moins une fonction époxy, les groupes X', identiques ou différents, sont des groupes hydrolysables, Y' est un groupe organique monovalent lié au silicium par un atome de carbone, n' et m' étant des entiers tels que n' = 1 ou 2 avec n'+m' = 1 ou 2, et
- optionnellement, au moins un composé, ou hydrolysat de celui-ci, de formule :

$$M'(Z')y \qquad (IV)$$

dans laquelle M' désigne un métal ou un métalloïde, les groupes Z', identiques ou différents, sont des groupes hydrolysables et y, égal ou supérieur à 4, est la valence du métal ou métalloïde M', le ratio :

$$Ri = \frac{\textit{masse de l' extrait sec théorique en composés III dans la composition de couche inférieure}}{\textit{masse de l' extrait sec théorique en composés IV dans la composition de couche inférieure}}$$

étant supérieur à 2,3.

Dans la présente demande, lorsqu'un article d'optique comprend un ou plusieurs revêtements à sa surface, l'expression "déposer une couche ou un revêtement sur l'article" signifie qu'une couche ou un revêtement est déposé sur la surface à découvert (exposée) du revêtement externe de l'article, c'est-à-dire son revêtement le plus éloigné du substrat.

Un revêtement qui est "sur" un substrat ou qui a été déposé "sur" un substrat est défini comme un revêtement qui (i) est positionné au-dessus du substrat, (ii) n'est pas nécessairement en contact avec le substrat, c'est-à-dire qu'un ou plusieurs revêtements intermédiaires peuvent être disposés entre le substrat et le revêtement en question, et (iii) ne recouvre pas nécessairement le substrat complètement.

L'article d'optique de l'invention comprend un substrat, de préférence transparent, en verre organique ou minéral, ayant des faces principales avant et arrière, l'une au moins desdites faces principales comportant un revêtement anti-abrasion et anti-rayures bicouche, de préférence les deux faces principales. Dans le reste de la demande, le revêtement anti-abrasion et anti-rayures de l'invention sera généralement simplement nommé "revêtement anti-abrasion" ou "revêtement bicouche."

De manière générale, le revêtement anti-abrasion de l'article d'optique selon l'invention peut être déposé sur tout substrat, et de préférence sur des substrats en verre organique, par exemple une matière plastique thermoplastique

ou thermodurcissable.

Parmi les matériaux thermoplastiques convenant pour les substrats, on peut citer les (co)polymères (méth) acryliques, en particulier le poly(méthacrylate de méthyle) (PMMA), les (co)polymères thio(méth)acryliques, le polyvinylbutyral (PVB), les polycarbonates (PC), les polyuréthanes (PU), les poly(thiouréthanes), les (co)polymères d'allylcarbonates de polyols, les copolymères thermoplastiques éthylène/acétate de vinyle, les polyesters tels que le poly (téréphtalate d'éthylène) (PET) ou le poly(téréphtalate de butylène) (PBT), les polyépisulfures, les polyépoxydes, les copolymères polycarbonates/polyesters, les copolymères de cyclooléfines tels que les copolymères éthylène/norbornène ou éthylène/cyclopentadiène et leurs combinaisons.

Par (co)polymère, on entend un copolymère ou un polymère. Par (méth)acrylate, on entend un acrylate ou un méthacrylate.

Parmi les substrats préférés selon l'invention, on peut citer des substrats obtenus par polymérisation des (métha)crylates d'alkyle, en particulier des (méth)acrylates d'alkyle en $C_1$-$C_4$, tels que le (méth)acrylate de méthyle et le (méth)acrylate d'éthyle, des (méth)acrylates aromatiques polyéthoxylés tels que les di(méth)acrylates de bisphénols polyéthoxylés, des dérivés allyles tels que les allylcarbonates de polyols aliphatiques ou aromatiques, linéaires ou ramifiés, des thio(méth)acrylates, des épisulfures et de mélanges précurseurs polythiols/polyisocyanates (pour l'obtention de polythiouréthanes).

Par polycarbonate (PC), on entend au sens de la présente invention aussi bien les homopolycarbonates que les copolycarbonates et les copolycarbonates séquencés. Les polycarbonates sont disponibles dans le commerce, par exemple auprès des sociétés GENERAL ELECTRIC COMPANY sous la marque LEXAN®, TEIJIN sous la marque PANLITE®, BAYER sous la marque BAYBLEND®, MOBAY CHEMICHAL Corp. sous la marque MAKROLON® et DOW CHEMICAL Co. sous la marque CALIBRE®.

Comme exemples de (co)polymères d'allyl carbonates de polyols, on peut citer les (co)polymères d'éthylèneglycol bis (allyl carbonate), de diéthylèneglycol bis 2-méthyl carbonate, de diéthylèneglycol bis (allyl carbonate), d'éthylèneglycol bis (2-chloro allyl carbonate), de triéthylèneglycol bis (allyl carbonate), de 1,3-propanediol bis (allyl carbonate), de propylèneglycol bis (2-éthyl allyl carbonate), de 1,3-butènediol bis (allyl carbonate), de 1,4-butènediol bis (2-bromo allyl carbonate), de dipropylèneglycol bis (allyl carbonate), de triméthylèneglycol bis (2-éthyl allyl carbonate), de pentaméthylèneglycol bis (allyl carbonate), d'isopropylène bisphénol A bis (allyl carbonate).

Les substrats particulièrement recommandés sont les substrats obtenus par (co)polymérisation du bis allyl carbonate du diéthylèneglycol, vendu, par exemple, sous la dénomination commerciale CR-39® par la société PPG Industries (lentilles ORMA® ESSILOR).

Parmi les substrats également particulièrement recommandés, on peut citer les substrats obtenus par polymérisation des monomères thio(méth)acryliques, tels que ceux décrits dans la demande de brevet français FR 2734827.

Bien évidemment, les substrats peuvent être obtenus par polymérisation de mélanges des monomères ci-dessus, ou peuvent encore comprendre des mélanges de ces polymères et (co)polymères.

Selon un mode de réalisation de l'invention, le substrat comprend une face avant et une face arrière, le revêtement anti-abrasion pouvant être appliqué sur au moins l'une des deux. Il est de préférence appliqué sur les faces avant et arrière du substrat.

Par face arrière (généralement concave) du substrat, on entend la face qui, lors de l'utilisation de l'article, est la plus proche de l'oeil du porteur. Inversement, par face avant (généralement convexe) du substrat, on entend la face qui, lors de l'utilisation de l'article, est la plus éloignée de l'oeil du porteur.

Avant le dépôt du revêtement anti-abrasion sur le substrat éventuellement revêtu, par exemple d'une couche de primaire anti-chocs, il est courant de soumettre la surface dudit substrat éventuellement revêtue à un traitement destiné à augmenter l'adhésion de la couche anti-abrasion inférieure, qui est généralement conduit sous vide, tel qu'un bombardement avec des espèces énergétiques, par exemple un faisceau d'ions ("Ion Pre-Cleaning" ou "IPC"), un traitement par décharge corona, par effluvage ou un traitement par plasma sous vide. Grâce à ces traitements de nettoyage, la propreté de la surface du substrat est optimisée. Un traitement par bombardement ionique est préféré, qui utilise de préférence en tant que gaz ionisant l'argon, l'oxygène, ou leurs mélanges, sous une tension d'accélération allant généralement de 50 à 200 V.

Par espèces énergétiques, on entend des espèces ayant une énergie allant de 1 à 150 eV, de préférence de 10 à 150 eV, et mieux de 40 à 150 eV. Les espèces énergétiques peuvent être des espèces chimiques telles que des ions, des radicaux, ou des espèces telles que des photons ou des électrons.

Un pré-traitement de surface chimique acide, basique ou au moyen d'un solvant ou mélange de solvants peut également être employé.

Selon la présente invention, le revêtement anti-abrasion et anti-rayures bicouche peut être déposé directement sur un substrat nu. Dans certaines applications, il est préférable que la surface principale du substrat soit revêtue d'un ou plusieurs revêtements fonctionnels préalablement au dépôt du revêtement anti-abrasion de l'invention. Ces revêtements fonctionnels peuvent être, sans limitation, une couche de primaire anti-chocs, un revêtement polarisé, un revêtement photochrome, un revêtement antistatique, un revêtement anti-abrasion et/ou anti-rayures additionnel ou un

revêtement coloré.

Le revêtement anti-abrasion bicouche de l'invention est de préférence déposé sur un substrat nu, sur un substrat revêtu d'un revêtement anti-abrasion et/ou anti-rayures additionnel qui est de préférence monocouche, ou sur un substrat revêtu d'une couche de primaire améliorant la résistance aux chocs et/ou l'adhésion des couches ultérieures dans le produit final.

Ce revêtement peut être toute couche de primaire anti-chocs classiquement utilisée pour les articles en matériau polymère transparent, tels que des lentilles ophtalmiques.

Parmi les compositions de primaire préférées, on peut citer les compositions à base de polyuréthanes thermoplastiques, telles que celles décrites dans les brevets japonais JP 63-141001 et JP 63-87223, les compositions de primaire poly(méth)acryliques, telles que celles décrites dans le brevet US 5,015,523, les compositions à base de polyuréthanes thermodurcissables, telles que celles décrites dans le brevet EP 0404111 et les compositions à base de latex poly(méth)acryliques ou de latex de type polyuréthane, telles que celles décrites dans les brevets US 5,316,791 et EP 0680492.

Les compositions de primaire préférées sont les compositions à base de polyuréthanes et les compositions à base de latex, en particulier les latex de polyuréthane.

Les latex poly(méth)acryliques sont des latex de copolymères constitués principalement par un (méth)acrylate, tel que par exemple le (méth)acrylate d'éthyle, de butyle, de méthoxyéthyle ou d'éthoxyéthyle, avec une proportion généralement mineure d'au moins un autre co-monomère, tel que par exemple du styrène.

Les latex poly(méth)acryliques préférés sont les latex de copolymères acrylate-styrène. De tels latex de copolymères acrylate-styrène sont disponibles commercialement auprès de la société ZENECA RESINS sous la dénomination NEOCRYL®.

Les latex de polyuréthane sont également connus et disponibles dans le commerce. A titre d'exemple, on peut citer les latex de polyuréthane contenant des motifs polyesters. De tels latex sont également commercialisés par la société ZENECA RESINS sous la dénomination NEOREZ® et par la société BAXENDEN CHEMICALS sous la dénomination WITCOBOND®.

Parmi les compositions de primaire commerciales convenant pour l'invention, on peut citer les compositions Witcobond® 232, Witcobond® 234, Witcobond® 240, Witcobond® 242, Neorez® R-962, Neorez® R-972, Neorez® R-986 et Neorez® R-9603.

On peut également utiliser dans les compositions de primaire des mélanges de ces latex, en particulier de latex polyuréthane et de latex poly(méth)acrylique.

La composition de primaire comprend de préférence des charges, qui sont généralement des nanoparticules, afin d'augmenter la dureté et/ou l'indice de réfraction du revêtement durci, et également empêcher une diffusion éventuelle de la couche immédiatement déposée sur le primaire. Les nanoparticules peuvent être organiques ou inorganiques. Un mélange de nanoparticules organiques et inorganiques peut également être utilisé.

De préférence, des nanoparticules inorganiques sont utilisées, en particulier des nanoparticules de nature oxyde métallique ou de métalloïde, nitrure ou fluorure, ou leurs mélanges.

Des exemples de nanoparticules convenant pour l'invention sont par exemple des nanoparticules des composés suivants : $SiO_2$, $Al_2O_3$, $ZrO_2$, $TiO_2$, $Sb_2O_5$, $Ta_2O_5$, $ZnO_2$, oxyde d'étain, oxyde d'indium, oxyde de cérium, $WO_3$, $Y_2O_3$, et leurs mélanges.

Les charges sont de préférence utilisées sous forme de colloïdes, c'est-à-dire sous la forme de fines particules, dont le diamètre (ou la plus grande dimension) est inférieur à 1 $\mu$m, de préférence inférieur à 150 nm, mieux inférieur à 100 nm, encore mieux allant de 10 à 80 nm, dispersées dans un milieu dispersant tel que l'eau, un alcool, une cétone, un ester ou leurs mélanges, de préférence un alcool.

Les charges sont de préférence des colloïdes de haut indice de réfraction (ou des précurseurs de ceux-ci), c'est-à-dire des colloïdes constitués d'un matériau ayant un indice de réfraction supérieur à 1,55. En particulier, les charges peuvent être des colloïdes de $TiO_2$, $ZrO_2$ $Sb_2O_5$, $SnO_2$, $WO_3$, $Al_2O_3$, $Y_2O_3$, $Ta_2O_5$ et leurs mélanges. La composition de primaire comprend de préférence de 5% à 65%, préférentiellement de 5 à 50% en masse de charges.

Les charges peuvent également être des particules composites, de préférence des colloïdes de particules composites, par exemple à base des oxydes suivants : $SiO_2/TiO_2$, $SiO_2/ZrO_2$, $SiO_2/TiO_2/ZrO_2$, $TiO_2/SiO_2/ZrO_2/SnO_2$. De tels colloïdes de particules composites sont disponibles auprès de la société Catalysts and Chemical.

Des particules composites particulièrement recommandées sont décrits dans les brevets EP 730168, JP 11310755, JP 200204301 et JP 2002363442.

Ces compositions de primaire peuvent être déposées sur les faces de l'article par trempage ou centrifugation puis séchées à une température d'au moins 70 °C et pouvant aller jusqu'à 100 °C, de préférence de l'ordre de 90 °C, pendant une durée de 2 minutes à 2 heures, généralement de l'ordre de 15 minutes, pour former des couches de primaire ayant des épaisseurs, après cuisson, de 0,2 à 2,5 $\mu$m, de préférence de 0,5 à 1,5 $\mu$m.

Le revêtement optionnel anti-abrasion et/ou anti-rayures sur lequel peut être déposé le revêtement anti-abrasion et anti-rayures bicouche de l'invention sera généralement nommé "revêtement anti-abrasion et/ou anti-rayures additionnel." Ce revêtement anti-abrasion et/ou anti-rayures additionnel est de préférence un revêtement monocouche.

Il peut être formé de toute couche classiquement utilisée comme revêtement anti-abrasion et/ou anti-rayures dans le domaine des lentilles ophtalmiques. Il s'agit de préférence d'un revêtement dur à base de poly(méth)acrylates ou de silicones comprenant généralement une ou plusieurs charges minérales destinées à augmenter la dureté et/ou l'indice de réfraction du revêtement une fois durci. Parmi les revêtements durs anti-abrasion et/ou anti-rayures additionnels recommandés dans la présente invention, on peut citer les revêtements obtenus à partir de compositions comprenant au moins un silane, de préférence un alcoxysilane et/ou un hydrolysat de celui-ci, obtenu par exemple par hydrolyse avec une solution d'acide chlorhydrique et optionnellement des catalyseurs de condensation et/ou de durcissement.

Les revêtements anti-abrasion et/ou anti-rayures additionnels préférés dans la présente invention sont les revêtements à base d'hydrolysats d'époxysilanes, en particulier ceux décrits dans la demande de brevet français FR 2702486 et dans les brevets US 4,211,823 et US 5,015,523, ou les revêtements à base de poly(méth)acrylates tels que ceux décrits dans la demande WO 2007/051841.

La composition de revêtement anti-abrasion et/ou anti-rayures additionnel peut être déposée sur la face principale du substrat par trempage ou centrifugation. Elle est ensuite durcie par la voie appropriée (de préférence thermique, ou UV).

Dans l'article d'optique final, l'épaisseur de ce revêtement anti-abrasion et/ou anti-rayures additionnel varie généralement de 2 à 10 μm, préférentiellement de 2 à 5 μm.

Le revêtement résistant à l'abrasion et aux rayures de l'invention est composé de deux couches adjacentes ayant des caractéristiques différentes et présentant une très bonne adhésion l'une à l'autre. Les compositions servant à la préparation des deux couches, la composition de couche anti-abrasion supérieure et la composition de couche anti-abrasion inférieure sont formulées de sorte que ledit revêtement présente un gradient de dureté, la couche supérieure étant plus dure que la couche inférieure.

Par couche supérieure du revêtement anti-abrasion, que l'on appellera simplement "couche supérieure," on entend la couche du revêtement anti-abrasion la plus éloignée du substrat.

Par couche inférieure du revêtement anti-abrasion, que l'on appellera simplement "couche inférieure," on entend la couche du revêtement anti-abrasion la plus proche du substrat.

Les deux compositions de revêtement anti-abrasion de l'invention sont des compositions thermodurcissables conduisant, après application sur une surface principale du substrat de l'article d'optique puis durcissement, à un revêtement anti-abrasion et anti-rayures bicouche, préférentiellement de nature polysiloxane.

La composition de couche supérieure comprend nécessairement un agent réticulant de formule II, alors que la présence de l'agent réticulant de formule IV n'est qu'optionnelle dans la composition de couche inférieure. Sa quantité est volontairement limitée afin d'obtenir une couche inférieure plus souple que la couche supérieure qui possède quant à elle, du fait de son taux de réticulation plus élevé, une dureté supérieure.

Dans la présente demande, les caractéristiques et préférences indiquées pour les composés de formules I à IV s'appliquent également à leurs hydrolysats.

Les composés époxysilanes de formules I et III vont tout d'abord être décrits simultanément. Bien entendu, la nature du composé 1 présent dans la couche supérieure et celle du composé III présent dans la couche inférieure sont indépendantes. Ceci signifie, par exemple, que les valeurs des entiers n et m sont indépendantes de celles des entiers n' et m'.

Les composés de formules I ou III comportent deux ou trois groupes X ou X' hydrolysables directement liés à l'atomes de silicium conduisant chacun à un groupe OH après hydrolyse, un ou deux groupes organiques R ou R' monovalents liés au silicium par un atome de carbone et contenant au moins une fonction époxy, et zéro ou un groupe organique monovalent Y ou Y' (m et m' = 0 ou 1). Il est à noter que des fonctions Si-OH peuvent être initialement présentes dans les composés de formules I ou III, auquel cas ils sont considérés comme des hydrolysats.

Les entiers n et m tels que définis ci-dessus définissent trois catégories de composés I. Les composés de formule $RYSi(X)_2$, les composés de formule $R_2Si(X)_2$, et enfin les composés de formule $RSi(X)_3$. Parmi ceux-ci, les époxysilanes de formule $RSi(X)_3$, qui comportent trois groupes hydrolysables liés à l'atome de silicium, sont préférés. Les mêmes conclusions s'appliquent aux composés de formule III définis par les entiers n' et m'.

Les groupes hydrolysables X ou X' peuvent désigner, indépendamment les uns des autres et sans limitation, des groupes alcoxy $-O-R^1$, où $R^1$ désigne de préférence un groupe alkyle linéaire ou ramifié, de préférence en $C_1$-$C_4$, ou un groupe alcoxyalkyle, des groupes acyloxy $-O-C(O)R^3$ où $R^3$ est un groupe alkyle, préférentiellement en $C_1$-$C_6$, de préférence méthyle ou éthyle, les halogènes tels que Cl et Br, les groupes amino éventuellement substitués par un ou deux groupes fonctionnels tels qu'un groupe alkyle ou silane, par exemple le groupe $-NHSiMe_3$.

De préférence, les groupes X ou X' sont des groupes alcoxy, et en particulier méthoxy, éthoxy, propoxy ou butoxy, mieux méthoxy ou éthoxy, ce qui fait des composés de formules I ou III des époxyalcoxysilanes.

Les groupes R ou R' monovalents liés au silicium par un atome de carbone sont des groupes organiques dans la mesure où ils contiennent au moins une fonction époxy, de préférence une seule fonction époxy.

Par fonction époxy, on entend un groupe d'atomes dans lequel un atome d'oxygène est directement lié à deux

atomes de carbone adjacents ou non-adjacents d'une chaîne carbonée ou d'un système carboné cyclique. Parmi les fonctions époxy, les fonctions oxiranes sont préférées, c'est-à-dire les groupes éthers cycliques saturés à trois chaînons.

Les groupes R ou R' préférés répondent aux formules V et VI suivantes :

V 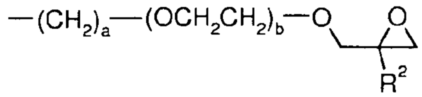

VI 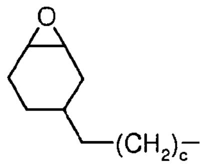

dans lesquelles $R^2$ est un groupe alkyle, de préférence un groupement méthyle, ou un atome d'hydrogène, idéalement un atome d'hydrogène, a et c sont des nombres entiers allant de 1 à 6, et b représente 0, 1 ou 2.

Le groupe de formule V préféré est le groupe γ-glycidoxypropyle ($R^2$ = H, a = 3, b = 0) et le groupe (3,4-époxycyclohexyl)alkyle de formule VI préféré est le groupe β-(3,4-époxycyclohexyl)éthyle (c = 1). Le groupe γ-glycidoxyéthoxypropyle peut également être employé ($R^2$ = H, a = 3, b = 1).

Les époxysilanes de formule I ou III préférés sont les époxyalcoxysilanes, comportant de préférence un groupe R ou R' et trois groupes alcoxy, ces derniers étant directement liés à l'atome de silicium. Les époxytrialcoxysilanes particulièrement préférés répondent aux formules VII et VIII suivantes :

VII 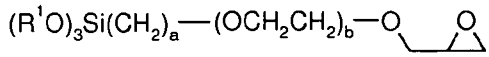

VIII 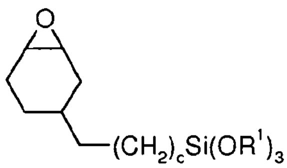

dans lesquelles $R^1$ est un groupement alkyle ayant de 1 à 6 atomes de carbone, préférentiellement un groupement méthyle ou éthyle, et a, b et c sont tels que définis ci-dessus.

Des exemples de tels époxysilanes sont le γ-glycidoxypropyl triéthoxysilane, le γ-glycidoxypropyl triméthoxysilane, le 2-(3,4-époxycyclohexyl) éthyltriméthoxysilane, le 2-(3,4-époxycyclohexyl) éthyltriéthoxysilane. D'autres exemples d'époxytrialcoxysilanes utilisables sont donnés dans le brevet US 4294950. Parmi ceux-ci, le γ-glycidoxypropyltriméthoxysilane (GLYMO) est préféré.

Les époxysilanes I ou III peuvent optionnellement comprendre un groupe organique monovalent Y ou Y' lié directement à l'atome de silicium par une liaison Si-C. Ces groupes peuvent être des groupes hydrocarbonés saturés ou non, de préférence en $C_1$-$C_{10}$ et mieux en $C_1$-$C_4$, par exemple un groupe alkyle, préférentiellement en $C_1$-$C_4$, tel que méthyle ou éthyle, un groupe alcényle tel que le groupe vinyle, un groupe aryle en $C_6$-$C_{10}$, par exemple phényle, éventuellement substitués, notamment par un ou plusieurs groupes alkyles en $C_1$-$C_4$, un groupe (méth)acryloxyalkyle, ou représentent les groupes analogues fluorés ou perfluorés des groupes hydrocarbonés précités, par exemple des groupes fluoroalkyles ou perfluoroalkyles, ou bien des groupes (poly)fluoro ou perfluoro alcoxy[(poly)alkylènoxy]alkyle.

De préférence, les groupes Y (ou Y') ne comportent pas de fonction susceptibles de réagir avec les silanes hydrolysés présents dans la composition de couche supérieure (ou inférieure), et notamment avec les groupements SiOH et/ou époxy de ces silanes. Idéalement, Y (ou Y') représente un groupe alkyle, préférentiellement en $C_1$-$C_4$, et mieux un groupe méthyle.

Les époxysilanes I ou III préférés comportant un groupe Y ou Y' sont des époxydialcoxysilanes tels que le γ-glycidoxypropyl(méthyl) diméthoxysilane, le γ-glycidoxypropyl(méthyl) diéthoxysilane et le γ-glycidoxyéthoxypropyl(méthyl) diméthoxysilane. Lorsqu'ils sont employés, les époxydialcoxysilanes sont de préférence combinés à des époxytrialcoxysilanes tels que ceux décrits ci-dessus, et sont alors préférentiellement utilisés à des teneurs plus faibles que lesdits époxytrialcoxysilanes.

Les composés de formules II et IV vont maintenant être décrits simultanément. Bien entendu, la nature du composé II présent dans la couche supérieure et celle du composé IV présent dans la couche inférieure sont indépendantes. Ceci signifie, par exemple, que la nature des groupes Z est indépendante de celle des groupes Z'.

Les groupes Z ou Z' sont des groupes hydrolysables pouvant être choisis, indépendamment les uns des autres, parmi les groupes hydrolysables précédemment cités dans le cadre de la description des groupes X et X'. Il est à noter que des fonctions M-OH ou M'-OH peuvent être initialement présentes dans les composés de formules II ou IV, auquel cas ils sont considérés comme des hydrolysats.

M ou M' représentent, indépendamment l'un de l'autre, des métaux ou métalloïdes, dont les valences respectives x ou y sont égales ou supérieures à 4, et varient généralement de 4 à 6. Ils sont préférentiellement tétravalents ou pentavalents. De préférence, les composés II ou IV sont des espèces tétravalentes (x =4, y = 4). Parmi les atomes représentés par M ou M', on peut citer des métaux tels que Sn, des métaux de transition tels que Zr, Hf, Nb, Cr, Ta, W ou Ti ou des métalloïdes tels que le silicium ou le germanium. L'antimoine sous sa forme pentavalente peut également convenir. M ou M' représentent de préférence le silicium, le zirconium, l'aluminium ou le titane, idéalement le silicium.

Ainsi, le composé II préféré est un composé de formule $Si(Z)_4$, dans laquelle les groupes Z, identiques ou différents, sont des groupes hydrolysables, et le composé IV préféré est un composé de formule $Si(Z')_4$, dans laquelle les groupes Z', identiques ou différents, sont des groupes hydrolysables.

Parmi ceux-ci, les composés II ou IV préférés sont les orthosilicates de tétraalkyle (ou tétraalcoxysilanes). On utilise avantageusement le tétraéthoxysilane (ou orthosilicate de tétraéthyle) $Si(OC_2H_5)_4$ noté TEOS, le tétraméthoxysilane $Si(OCH_3)_4$ noté TMOS, le tétra(n-propoxy)silane, le tétra(i-propoxy)silane, le tétra(n-butoxy)silane, le tétra(sec-butoxy)silane ou le tétra(t-butoxy)silane, et de préférence le TEOS.

De façon surprenante, les inventeurs ont trouvé que l'emploi d'un précurseur d'une matrice de silice tel que le TEOS était préférable à l'emploi de silice colloïdale, ce qui apparaîtra clairement à la lecture des exemples. Les revêtements à base d'une composition comprenant un mélange d'un époxyalcoxysilane et de silice colloïdale, largement employés dans l'art antérieur, conduisent à des revêtements dont les performances en termes de résistance à l'abrasion et/ou aux rayures, en particulier à l'abrasion, sont inférieures à celles des revêtements anti-abrasion conformes à l'invention.

Dans les compositions de couche supérieure ou inférieure de l'invention, les composés I à IV peuvent être hydrolysés, partiellement ou totalement. Avantageusement, ils sont complètement hydrolysés. On préfère utiliser pour l'hydrolyse une quantité d'eau au moins stœchiométrique, c'est à dire une quantité molaire en eau correspondant au moins au nombre de moles de groupes hydrolysables.

Les hydrolysats sont préparés de façon connue en soi. Les techniques exposées dans les brevets FR 2702486 et US 4,211,823 peuvent notamment être employées.

Les hydrolysats des composés I à IV peuvent être préparés en ajoutant dans les compositions de l'eau ou un solvant organique ou un mélange d'eau et de solvant organique et de préférence un catalyseur d'hydrolyse des groupes X, X', Z ou Z', tel qu'un acide minéral, typiquement une solution aqueuse d'acide chlorhydrique, sulfurique, nitrique ou phosphorique ou un acide organique tel que l'acide acétique, de préférence HCl ou $H_3PO_4$.

Les solvants organiques ou le mélange de solvants organiques convenant pour l'étape d'hydrolyse sont de préférence des solvants polaires, notamment les alcanols comme le méthanol, l'éthanol, l'isopropanol, l'isobutanol, le *n*-butanol, les éthers méthyliques du propylène glycol et leurs mélanges. D'autres solvants peuvent être employés, par exemple des cétones telles que l'acétone, des éthers tels que le tétrahydrofurane ou le 1,4-dioxane, l'acétonitrile, des solvants aromatiques tels que le toluène ou le xylène ou des chlorures d'alkyle. Le solvant organique préféré est le méthanol.

Les compositions de revêtement anti-abrasion selon l'invention comprennent, après hydrolyse, de préférence au moins 1 % en masse d'eau par rapport à la masse de ladite composition. Cette eau peut provenir d'une hydrolyse incomplète des silanes de départ, de la réaction de condensation des silanols formés au cours de cette hydrolyse ou de l'utilisation d'un excès d'eau.

Après l'étape d'hydrolyse des composés précurseurs I à IV, dont la durée est généralement comprise entre 1h et 24h, préférentiellement entre 2h et 6h, au moins un catalyseur de condensation et/ou au moins un catalyseur de durcissement peuvent optionnellement être ajoutés dans les compositions de couche anti-abrasion inférieure et/ou supérieure afin de diminuer la température et la durée de la condensation et du durcissement. De nombreux exemples de catalyseurs de condensation et/ou de durcissement utilisables sont donnés dans les ouvrages "Chemistry and Technology of the Epoxy Resins", B. Ellis (Ed.) Chapman Hall, New York, 1993 et "Epoxy Resins Chemistry and Technology" 2éme édition, C. A. May (Ed.), Marcel Dekker, New York, 1988.

Parmi les catalyseurs de condensation des composés I à IV hydrolysés utilisables, on peut citer les acides ou anhydrides d'acides polyfonctionnels saturés ou insaturés. Par acide ou anhydride polyfonctionnel, on entend un acide ou un anhydride d'acide contenant plusieurs fonctions acide ou anhydride d'acide. Ce sont de préférence des composés de nature carboxylique, parmi lesquels on peut citer les acides maléique, chloromaléique, fumarique, itaconique, citraconique, tétrahydrophthalique, triméllitique, oxalique, chlorendique (acide 1,4,5,6,7,7-hexachlorobicyclo[2.2.1]-hept-5-ène-2,3-dicarboxylique) et les anhydrides maléique, itaconique, phtalique, hexahydrophthalique, hexahydro-4-méthylphthalique, tétrachlorophthalique, citraconique, 1,2-triméllitique (1,2,4-benzènetricarboxylique), 1,2-cyclohexanedicarboxylique, bicyclo[2.2.1]hept-5-ène-2,3-dicarboxylique, méthylbicyclo[2.2.1]hept-5-ène-2,3-dicarboxylique, bicyclo [2.2.1]hept-5-ène-2,3-dicarboxylique, dodécènylsuccinique, dichloromaléique, le dianhydride pyroméllitique, et leurs mélanges. Des acides ou anhydrides non carboxyliques tels que l'anhydride vanadique peuvent également être employés. Les catalyseurs de condensation préférés sont l'acide maléique, l'acide itaconique, l'acide triméllitique et l'anhydride triméllitique.

Les catalyseurs de durcissement agissent notamment au niveau de la polymérisation des fonctions époxy et facilitent l'action des catalyseurs de condensation. Parmi les composés utilisables, on peut citer les dérivés de l'imidazole et leurs sels d'imidazolium, la *N*-cyanoguanidine ($H_2NC(=NH)NHCN$, dimère du cyanamide), qui est également connue sous le nom de dicyandiamide, les sels métalliques d'acétylacétone ayant pour formule $M(CH_3COCHCOCH_3)_n$, dans laquelle M représente un ion métallique, de préférence $Zn^{2+}$, $Co^{3+}$, $Fe^{3+}$ ou $Cr^{3+}$, et n un entier allant généralement de 1 à 3, de préférence égal au degré d'oxydation du métal M, le tétrathiocyanatodiamminechromate(III) d'ammonium $NH_4[Cr(SCN)_4(NH_3)_2]$, qui est également connue sous le nom de sel de Reinecke, les composés à base d'aluminium, les carboxylates de métaux tels que le zinc, le titane, le zirconium, l'étain ou le magnésium, par exemple l'octoate de zinc ou l'octoate stanneux, les sels d'iodonium tels que les hexafluoroantimonates et tétrakis(pentafluorophényl)borate de diaryliodonium, les sels de sulfonium tels que les hexafluorophosphates et hexafluoroantimonates de triarylsulfonium et leurs mélanges.

Des exemples non limitatifs de dérivés de l'imidazole utilisables en tant que catalyseurs de durcissement sont les 2-alkylimidazoles tels que le 2-méthylimidazole, 2-phenyl-4-méthylimidazole ou le 2-propyl-4-méthylimidazole, les 1-cyanoalkylimidazoles tels que le 1-cyanoéthyl-2-méthylimidazole, le 1-cyanoethyl-2,4-diméthylimidazole ou le 1-cyanoéthyl-2-phényl-4,5-dicyanoéthoxyméthylimidazole, et les 5-hydroxyalkylimidazoles tels que le 2-phényl-4-méthyl-5-hydroxyméthylimidazole ou le 2-phényl-4,5-dihydroxyméthylimidazole. D'autres exemples de ces composés sont donnés dans le brevet US 4294950.

Des exemples non limitatifs de composés à base d'aluminium utilisables en tant que catalyseurs de durcissement sont les chélates d'aluminium et les acylates et alcoolates d'aluminium(III) ayant pour formules générales préférées $Al(OC(O)R)_n(OR')_{3-n}$ et $Al(OSiR''_3)_n(OR')_{3-n}$, dans lesquelles R et R' sont des groupes alkyle à chaîne linéaire ou ramifiée ayant de 1 à 10 atomes de carbone, R'' est un groupe alkyle à chaîne linéaire ou ramifiée ayant de 1 à 10 atomes de carbone, un groupement phényle, un groupement acylate de formule OC(O)R où R a la signification indiquée ci-dessus, et n est un nombre entier de 1 à 3. De préférence, R' est un groupe isopropyle ou éthyle, R et R'' sont des groupes méthyle.

Les chélates d'aluminium peuvent être formés en faisant réagir un alcoolate ou un acylate d'aluminium avec des agents chélatants exempts d'azote et de soufre, contenant de l'oxygène comme atome de coordination, par exemple l'acétylacétone, l'acétoacétate d'éthyle ou le malonate de diéthyle. Ils peuvent être choisis parmi l'acétylacétonate d'aluminium noté $Al(acac)_3$, le bisacétylacétonate d'aluminium mono(acétoacétate d'éthyle), le monoacétylacétonate d'aluminium bis(acétoacétate d'éthyle), le di-n-butoxy aluminium mono(acétoacétate d'éthyle) et le di-i-propoxy aluminium mono(acétoacétate d'éthyle). D'autres exemples de ces composés sont donnés dans le brevet EP 0614957. Lorsque le catalyseur de durcissement est un chélate d'aluminium, la composition de revêtement comprend de préférence un solvant organique dont la température d'ébullition à pression atmosphérique est comprise entre 70 et 140 °C, par exemple l'éthanol, l'isopropanol, l'acétate d'éthyle, la méthyléthylcétone ou le tétrahydropyrane.

De préférence, on utilise en tant que systèmes catalytiques dans les compositions de revêtement anti-abrasion de l'invention une combinaison acide itaconique/N-cyanoguanidine ou bien un chélate d'aluminium tel que l'acétylacétonate d'aluminium. Les compositions de revêtement anti-abrasion comprenant un mélange de composés I/II ou III/IV, par exemples les compositions de couches supérieures, de même que les compositions de couches inférieures, comprennent préférentiellement une combinaison acide itaconique/*N*-cyanoguanidine en tant que système catalytique.

Sans vouloir être limités par une quelconque théorie, les inventeurs pensent qu'au-delà d'une certaine teneur en agents réticulants de nature II ou IV, l'emploi d'un système catalytique aussi actif qu'un chélate d'aluminium conduit à une couche durcie dont le taux de réticulation est trop élevé.

Il est donc préférable que les compositions de couches inférieures comprenant plus de 10 % en masse de composés IV par rapport à la masse de la composition, ne comprennent pas de chélate d'aluminium.

Les catalyseurs de durcissement et de condensation sont utilisés dans des proportions classiques permettant d'obtenir la condensation le durcissement des compositions selon l'invention en une durée de l'ordre de quelques heures à des températures de l'ordre de 100 °C. Les catalyseurs de durcissement sont généralement utilisés dans une proportion de 0 à 5 % en masse par rapport à la masse totale de la composition de couche supérieure (ou inférieure), de préférence de 0,1 à 3 %. Les catalyseurs de condensation sont généralement utilisés dans une proportion de 0 à 10 % en masse par rapport à la masse totale de la composition de couche supérieure (ou inférieure), de préférence de 0 à 8 %.

Les deux compositions de revêtement anti-abrasion de l'invention peuvent contenir des additifs classiquement employés dans les compositions de revêtement anti-abrasion et/ou anti-rayures, tels que des tensioactifs qui favorisent la qualité optique du dépôt, de préférence des tensioactifs fluorés ou siliconés, des stabilisants, par exemple des additifs

pour prolonger la durée de stockage des compositions tels que des agents chélatants de nature β-dicétone ou β-cétoester comme l'acétylacétone ou l'acétoacétate d'éthyle, des charges, des pigments, des colorants, des absorbeurs d'UV, des antioxydants, des agents de réticulation additionnels et éventuellement des photo-initiateurs si elles contiennent des composés photo-polymérisables.

Les compositions de couche supérieure ou inférieure de l'invention peuvent contenir des charges en faible proportion, généralement une ou plusieurs charges minérales destinées à augmenter la dureté et/ou l'indice de réfraction du revêtement une fois durci.

Les charges minérales peuvent être choisies parmi les oxydes ou fluorures de métaux ou métalloïdes tels que Si, Sb, Ti, Ta, Zr, Al, Ce, Sn, In, W et leurs mélanges, de préférence la silice, le dioxyde de titane, $Sb_2O_5$, $ZrO_2$, $Al_2O_3$ et/ou des oxydes mixtes tels que $TiO_2/ZrO_2$, $TiO_2/ZrO_2/SiO_2$, et $TiO_2/Fe_2O_3$ (particules composites de ces oxydes). De préférence, les charges minérales sont employées sous forme colloïdale, c'est-à-dire sous forme de fines particules dont le diamètre (ou la plus grande dimension) est, de préférence, inférieur à 1 μm, mieux inférieur à 150 nm et mieux encore inférieur à 100 nm, en dispersion dans un milieu dispersant, tel que de l'eau, un alcool, une cétone, un ester ou leurs mélanges, préférentiellement un alcool. Un exemple d'une telle charge est la silice colloïdale, par exemple la silice Nissan Sun Colloid Mast qui renferme 30 % en masse de matière solide $SiO_2$ en suspension dans le méthanol.

Selon un mode de réalisation préférentiel, la composition de couche supérieure et/ou la composition de couche inférieure de l'invention comprennent moins de 10 % en masse de charges (matières solides) par rapport à la masse totale de la composition, mieux n'en comprennent pas. En particulier, il est souhaitable que la composition de couche supérieure et/ou la composition de couche inférieure de l'invention comprennent moins de 10 % en masse de silice colloïdale par rapport à la masse totale de la composition, mieux n'en comprennent pas.

De préférence, la masse totale des charges présentes dans la composition de couche supérieure et/ou la composition de couche inférieure, autrement dit la masse de l'extrait sec théorique en charges représente moins de 30 % de la masse de l'extrait sec théorique de la composition, mieux moins de 20 % et encore mieux moins de 10 %. Ces préférences s'appliquent également à la masse de l'extrait sec théorique en silice colloïdale.

Par "masse de l'extrait sec théorique en un constituant d'une composition," on entend la masse théorique de matière solide représentée par ce constituant dans ladite composition, c'est-à-dire sa contribution en masse à la masse de l'extrait sec théorique de la composition.

La masse de l'extrait sec théorique d'une composition est défini comme la somme de la masse de l'extrait sec théorique en chacun de ses constituants.

Par "masse de l'extrait sec théorique en composant I, II, III ou IV" on entend:

- pour les composés I et III, la masse desdits composés calculée en unités $R_nY_m\,Si(O)_{(4-n-m)/2}$ ou $R'_{n'}\,Y'_{m'}\,Si(O)_{(4-n'-m')/2}$ dans lesquelles R, Y, n, m, R', Y', n' et m' sont tels que définis précédemment ;
- pour les composés II et IV, la masse desdits composés calculée en unités $M(O)_{x/2}$ ou $M'(O)_{y/2}$ où M, M', x et y sont tels que définis précédemment.

La masse de l'extrait sec théorique en composant I, II, III ou IV est plus faible que la masse de composant I, II, III ou IV réellement utilisée. La masse de l'extrait sec théorique en catalyseurs ou charges minérales est généralement égale à la masse de composés réellement utilisée.

Les compositions de couche anti-abrasion supérieure et inférieure de l'invention peuvent contenir dans certains modes de réalisation les mêmes catégories de composés, mais se distinguent par leurs teneurs en constituants.

Ainsi, le ratio Rs est inférieur ou égal à 2,3, de préférence inférieur ou égal à 2,0, mieux inférieur ou égal à 1,5, encore mieux inférieur ou égal à 1,25, et de façon optimale est inférieur ou égal à 1,1, Rs étant défini de la façon suivante :

$$Rs = \frac{\text{masse de l' extrait sec théorique en composés I dans la composition de couche supérieure}}{\text{masse de l' extrait sec théorique en composés II dans la composition de couche supérieure}}$$

Cette définition du ratio Rs implique qu'une composition de couche supérieure ne comprenant pas de composant II ne répond pas à la définition de l'invention. Rs est de préférence supérieur ou égal à 0,85, mieux supérieur ou égal à 0,9, encore mieux supérieur ou égal à 0,95.

La masse de l'extrait sec théorique en composés I représente de préférence de 30 à 60 % de la masse de l'extrait sec de la composition de couche supérieure, mieux de 40 à 55 %. La masse de l'extrait sec théorique en composés II représente de préférence de 30 à 60 % de la masse de l'extrait sec de la composition de couche supérieure, mieux de 40 à 55 %. La somme de la masse des extraits secs théoriques en composés I et II représente de préférence au moins 75 % de la masse de l'extrait sec de la composition de couche inférieure, mieux au moins 80 %, mieux encore au moins 85 %.

L'extrait sec théorique de la composition de couche supérieure représente de préférence de 5 à 40 %, mieux

de 15 à 25 % en masse, par rapport à la masse totale de la composition.

La composition de couche supérieure contient de préférence de 5 à 30 % en masse de composés I par rapport à la masse de la composition, de préférence de 10 à 25 %, mieux de 10 à 20 %. La composition de couche supérieure contient de préférence de 15 à 50 % en masse de composés II par rapport à la masse de la composition, de préférence de 20 à 40 %, mieux de 25 à 40 %.

La somme de la masse des composés I et II représente de préférence de 25 à 65 % de la masse de la composition de couche supérieure, de préférence de 30 à 60 %, mieux de 35 à 55 %. Le ratio de la masse de composés I sur la masse de composés II dans cette composition va de préférence de 0,25 à 0,60, mieux de 0,30 à 0,60, et encore mieux de 0,35 à 0,45.

Le ratio Ri est supérieur à 2,3, de préférence supérieur ou égal à 3,0, mieux supérieur ou égal à 3,5, encore mieux supérieur ou égal à 4,5, et de façon optimale est supérieur ou égal à 10, Ri étant défini de la façon suivante :

$$Ri = \frac{\textit{masse de l' extrait sec théorique en composés III dans la composition de couche inférieure}}{\textit{masse de l' extrait sec théorique en composés IV dans la composition de couche inférieure}}$$

Cette définition du ratio Ri implique qu'une composition de couche inférieure ne comprenant pas de composant IV répond à la définition de l'invention, Ri tendant en effet vers une valeur infinie.

La masse de l'extrait sec théorique en composés III représente de préférence plus de 40 % de la masse de l'extrait sec de la composition de couche inférieure, mieux plus de 50 %, mieux encore plus de 60 % et de façon optimale plus de 65 %. La masse de l'extrait sec théorique en composés IV représente de préférence moins de 30 % de la masse de l'extrait sec de la composition de couche inférieure, mieux moins de 25 %, mieux encore moins de 20 % et de façon optimale moins de 10 %. La somme de la masse des extraits secs théoriques en composés III et IV représente de préférence au moins 70 % de la masse de l'extrait sec de la composition de couche inférieure, mieux au moins 75 %, mieux encore au moins 80 %.

L'extrait sec théorique de la composition de couche inférieure représente de préférence de 10 à 50 %, mieux de 25 à 40 % en masse, par rapport à la masse totale de la composition.

La composition de couche inférieure contient de préférence de 15 à 70 % en masse de composés III par rapport à la masse de la composition, de préférence de 20 à 60 %, mieux de 25 à 55 %. La composition de couche inférieure contient de préférence de 0 à 35 % en masse de composés IV par rapport à la masse de la composition, de préférence de 0 à 25 %, mieux de 0 à 15 % et encore mieux de 0 à 10 %. Selon un mode de réalisation particulier, la composition de couche inférieure ne comprend pas de composés de formule IV ou d'hydrolysat de composés de formule IV.

La somme de la masse des composés III et IV représente de préférence de 25 à 75 % de la masse de la composition de couche inférieure, de préférence de 30 à 70 %, mieux de 35 à 65 %. Le ratio de la masse de composés III sur la masse de composés IV dans cette composition est de préférence supérieur ou égal à 1,25, mieux supérieur ou égal à 1,50, encore mieux supérieur ou égal à 1,75. Selon un mode de réalisation particulier, ce ratio est supérieur ou égal à 4.

Dans l'article d'optique final, l'épaisseur du revêtement anti-abrasion et anti-rayures de l'invention varie généralement de 1 à 15 $\mu$m, préférentiellement de 1 à 10 $\mu$m, mieux de 2 à 8 $\mu$m, et encore mieux de 3 à 6 $\mu$m. L'épaisseur de la couche inférieure du revêtement anti-abrasion varie de préférence de 1 à 6 $\mu$m, mieux de 2 à 5 $\mu$m, et mieux encore de 3 à 5 $\mu$m et l'épaisseur de la couche supérieure du revêtement anti-abrasion varie, de façon indépendante, de préférence de 0,5 à 4 $\mu$m, mieux de 0,7 à 2 $\mu$m et mieux encore de 0,7 à 1,5 $\mu$m. Le ratio de l'épaisseur de la couche inférieure sur l'épaisseur de la couche supérieure est de préférence supérieur ou égal à 1,5, mieux supérieur ou égal à 2,0, et encore mieux supérieur ou égal à 3,0.

Une couche supplémentaire de revêtement anti-abrasion et/ou anti-rayures peut optionnellement être déposée sur la couche supérieure du revêtement bicouche de l'invention. Elle sera généralement nommée "couche supplémentaire anti-abrasion et/ou anti-rayures." Cette couche supplémentaire et ladite couche supérieure sont de préférence adjacentes, c'est-à-dire directement en contact et adhérant entre elles.

La couche supplémentaire anti-abrasion et/ou anti-rayures est une couche de composition de couche supplémentaire anti-abrasion et/ou anti-rayures durcie, qui comprend:

- au moins un composé organosilane, ou hydrolysat de celui-ci, de formule :

$$R''_{n''}Y''_{m''}Si(X'')_{4-n''-m''} \qquad \text{(IX)}$$

dans laquelle les groupes R", identiques ou différents, sont des groupes organiques monovalents liés au silicium par un atome de carbone et contenant au moins une fonction époxy, les groupes X", identiques ou différents, sont des groupes hydrolysables, Y" est un groupe organique monovalent lié au silicium par un atome de carbone, n" et

m" étant des entiers tels que n" = 1 ou 2 avec n"+m" = 1 ou 2, et

- au moins un composé, ou hydrolysat de celui-ci, de formule :

$$M''(Z'')_z \qquad (X)$$

dans laquelle M" désigne un métal ou un métalloïde, les groupes Z", identiques ou différents, sont des groupes hydrolysables et z, égal ou supérieur à 4, de préférence de 4 à 6 est la valence du métal ou métalloïde M", le ratio :

$$Rss = \frac{\text{masse de l' extrait sec théorique en composés IX dans la composition de couche supplémentaire}}{\text{masse de l' extrait sec théorique en composés X dans la composition de couche supplémentaire}}$$

étant inférieur ou égal à 2,3 et strictement inférieur au ratio Rs précédemment défini, la masse de l'extrait sec théorique en composés X représentant au moins 45 % de la masse de l'extrait sec de la composition de couche supplémentaire anti-abrasion et/ou anti-rayures et l'épaisseur de la couche supplémentaire anti-abrasion et/ou anti-rayures étant inférieure à celle de la couche supérieure du revêtement bicouche de l'invention.

Les caractéristiques structurelles de la couche supplémentaire anti-abrasion et/ou anti-rayures, et celles relatives à sa préparation, peuvent être choisies parmi celles qui ont été précédemment décrites dans le cas de la couche supérieure du revêtement bicouche de l'invention, et ne seront donc pour cette raison pas répétées, à l'exception toutefois des caractéristiques relatives au ratio Rss, à l'épaisseur de cette couche et à la proportion de la masse de l'extrait sec théorique en époxysilanes de formule X par rapport à la masse de l'extrait sec de la composition, qui diffèrent.

Ainsi, par exemple, les époxysilanes de formule IX peuvent être choisis parmi les composés précédemment cités dans le cadre de la description des composés de formule I, et les composés de formule X peuvent être choisis parmi les composés précédemment cités dans le cadre de la description des composés de formule II.

De préférence, la masse de l'extrait sec théorique en composés X représente au moins 50% de la masse de l'extrait sec de la composition de couche supplémentaire anti-abrasion et/ou anti-rayures, et de préférence 65% ou moins, mieux 60% ou moins, la gamme idéale étant 55-60%.

Dans l'article d'optique final, l'épaisseur de la couche supplémentaire anti-abrasion et/ou anti-rayures, tout en étant inférieure à celle de la couche supérieure du revêtement bicouche de l'invention, varie préférentiellement de 0,5 à 2μm, mieux de 0,5 à 1,5μm.

Le ratio Rss est strictement inférieur au ratio Rs, ce qui permet d'obtenir un gradient de dureté par augmentation du taux de composés de type II/IV/X de la couche anti-abrasion inférieure à la couche supplémentaire anti-abrasion et/ou anti-rayures. Rss est de préférence inférieur ou égal à 2,0, mieux inférieur ou égal à 1,5, encore mieux inférieur ou égal à 1,25, et de façon optimale est inférieur ou égal à 1,1. Rss est de préférence supérieur ou égal à 0,85, mieux supérieur ou égal à 0,9, encore mieux supérieur ou égal à 0,95.

De préférence, l'article d'optique de l'invention comporte 4 couches ou moins de revêtement anti-abrasion et/ou anti-rayures, mieux 3 couches ou moins de revêtement anti-abrasion et/ou anti-rayures et encore mieux deux couches de revêtement anti-abrasion et anti-rayures, c'est-à-dire qu'il ne comporte pas d'autres couches anti-abrasion et/ou anti-rayures que celles du revêtement bicouche de l'invention.

Un revêtement anti-reflets peut optionnellement être déposé sur le revêtement anti-abrasion et anti-rayures, c'est-à-dire sur la couche supérieure de celui-ci, ou sur la couche supplémentaire anti-abrasion et/ou anti-rayures. Un revêtement anti-reflets se définit comme un revêtement, déposé à la surface d'un article d'optique, qui améliore les propriétés anti-réfléchissantes de l'article d'optique final. Il permet de réduire la réflexion de la lumière à l'interface article-air sur une portion relativement large du spectre visible.

Les revêtements anti-reflets sont bien connus et comprennent classiquement un empilement monocouche ou multicouches de matériaux diélectriques tels que SiO, $SiO_2$, $Al_2O_3$, $MgF_2$, LiF, $Si_3N_4$, $TiO_2$, $ZrO_2$, $Nb_2O_5$, $Y_2O_3$, $HfO_2$, $SC_2O_3$, $Ta_2O_5$, $Pr_2O_3$, ou leurs mélanges.

Comme cela est bien connu également, les revêtements anti-reflets sont, de préférence, des revêtements multicouches comprenant alternativement des couches de haut indice de réfraction (HI) et des couches de bas indice de réfraction (BI). Avantageusement, les couches BI du revêtement anti-reflets comprennent un mélange de $SiO_2$ et d'$Al_2O_3$.

Dans la présente demande, une couche d'un empilement anti-reflets est dite couche de haut indice de réfraction lorsque son indice de réfraction est supérieur à 1,55, de préférence supérieur ou égal à 1,6, mieux supérieur ou égal à 1,8 et encore mieux supérieur ou égal à 2,0. Une couche d'un empilement anti-reflets est dite couche de bas indice de réfraction lorsque son indice de réfraction est inférieur ou égal à 1,55, de préférence inférieur ou égal à 1,50, mieux inférieur ou égal à 1,45.

Sauf indication contraire, les indices de réfraction auxquels il est fait référence dans la présente invention sont

exprimés à 25 °C pour une longueur d'onde de 550 nm.

Préférentiellement, l'épaisseur physique totale du revêtement anti-reflets est inférieure à 1 micromètre, mieux inférieure ou égale à 500 nm et mieux encore inférieure ou égale à 250 nm. L'épaisseur physique totale du revêtement anti-reflets est généralement supérieure à 100 nm, de préférence supérieure à 150 nm.

Il est possible d'interposer une sous-couche, généralement en $SiO_2$, entre le revêtement anti-reflets et le revêtement sous-jacent, qui est généralement le revêtement anti-abrasion et anti-rayures, dans le but d'améliorer la résistance à l'abrasion et/ou aux rayures du revêtement anti-reflets et d'améliorer son adhésion au revêtement sous-jacent.

Le revêtement anti-reflets est généralement appliqué par dépôt sous vide selon l'une des méthodes suivantes : i) par évaporation, éventuellement assistée par un faisceau ionique; ii) par pulvérisation par faisceau d'ion ; iii) par pulvérisation cathodique ; iv) par dépôt chimique en phase vapeur assisté par plasma.

En plus des méthodes de dépôt sous vide, il est possible de déposer un revêtement anti-reflets multicouches par voie humide, notamment par dépôt centrifuge de compositions liquides contenant un hydrolysat de silanes et des matériaux colloïdaux de haut ou de bas indice de réfraction. De tels revêtements dont les couches comprennent une matrice hybride organique/inorganique à base de silanes dans laquelle sont dispersés des matériaux colloïdaux permettant d'ajuster l'indice de réfraction de chaque couche sont décrits par exemple dans le brevet FR 2858420.

Toutefois, un revêtement anti-reflets comprenant uniquement un empilement de couches diélectriques minérales est préféré. Il comprend de préférence un empilement d'au moins trois couches diélectriques présentant une alternance de couches HI et BI.

L'article d'optique selon l'invention peut également comporter des revêtements formés sur le revêtement anti-reflets et capables de modifier ses propriétés de surface, tels que des revêtements hydrophobes et/ou oléophobes (top coat anti-salissures). Ces revêtements sont de préférence déposés sur la couche externe du revêtement anti-reflets. Leur épaisseur est en général inférieure ou égale à 10 nm, de préférence de 1 à 10 nm, mieux de 1 à 5 nm.

Il s'agit généralement de revêtements de type fluorosilane ou fluorosilazane. Ils peuvent être obtenus par dépôt d'un fluorosilane ou fluorosilazane précurseur, comprenant de préférence au moins deux groupes hydrolysables par molécule. Les fluorosilanes précurseurs contiennent préférentiellement des groupements fluoropolyéthers et mieux des groupements perfluoropolyéthers. Ces fluorosilanes sont bien connus et sont décrits, entre autres, dans les brevets US 5,081,192, US 5,763,061, US 6,183, 872, US 5,739, 639, US 5,922,787, US 6,337,235, US 6,277,485 et EP 0933377.

Une composition de revêtement hydrophobe et/ou oléophobe préférée est commercialisée par Shin-Etsu Chemical sous la dénomination KP 801M®. Une autre composition de revêtement hydrophobe et/ou oléophobe préférée est commercialisée par Daikin Industries sous la dénomination OPTOOL DSX®. Il s'agit d'une résine fluorée comprenant des groupes perfluoropropylène.

Typiquement, un article d'optique selon l'invention comprend un substrat successivement revêtu d'une couche de primaire anti-chocs, du revêtement anti-abrasion et anti-rayures bicouche de l'invention, d'un empilement anti-reflets et d'un revêtement hydrophobe et/ou oléophobe. L'article selon l'invention est de préférence une lentille optique, mieux une lentille ophtalmique pour lunettes, ou une ébauche de lentille optique ou ophtalmique. La lentille peut être une lentille polarisée ou une lentille photochromique.

L'invention concerne également un procédé de préparation d'un article d'optique résistant à l'abrasion et aux rayures tel que défini ci-dessus, comprenant au moins les étapes suivantes :

a) fournir un article d'optique comprenant un substrat ayant au moins une surface principale;
b) déposer sur une surface principale du substrat une couche de composition de couche inférieure telle que définie précédemment;
c) durcir au moins partiellement ladite composition de couche inférieure par voie thermique;
d) déposer sur la couche résultant de l'étape précédente une couche de composition de couche supérieure telle que définie précédemment;
e) durcir ladite composition de couche supérieure par voie thermique;
f) récupérer un article d'optique comprenant un substrat ayant une surface principale revêtue d'un revêtement anti-abrasion et anti-rayures composé d'une couche inférieure adhérant à une couche supérieure.

La composition de couche inférieure peut être déposée sur le substrat de l'article d'optique selon toute technique appropriée, par exemple par trempage, centrifugation, pulvérisation, arrosage ou application à la brosse ou au rouleau, de préférence par trempage ou centrifugation.

Selon une première variante du procédé, la composition de couche inférieure est complètement durcie par voie thermique avant le dépôt de la composition de couche supérieure, au cours de l'étape c). Son durcissement est mis en oeuvre de façon préférentielle à une température de 80 à 150 °C, de préférence 90-120 °C, pendant généralement 30 minutes à 4 heures.

Préférentiellement, la surface de l'article d'optique résultant de l'étape c), c'est-à-dire la couche inférieure, est

soumise à un traitement de préparation de surface avant l'étape d) de dépôt à sa surface de la composition de couche supérieure.

Ce traitement d'activation physique ou chimique, destiné à augmenter l'adhésion de la couche supérieure, est généralement conduit sous vide. Il peut s'agir d'un bombardement avec les espèces énergétiques précédemment définies, par exemple un faisceau d'ions ("Ion Pre-Cleaning" ou "IPC") ou un faisceau d'électrons, un traitement par décharge corona, par effluvage, un traitement UV, un traitement par plasma sous vide, généralement un plasma d'oxygène ou d'argon, un traitement acide ou basique et/ou par solvants (eau ou solvant organique). Plusieurs de ces traitements peuvent être combinés.

L'étape intermédiaire de préparation de surface est de préférence un traitement par une solution basique, qui comprend typiquement une attaque chimique de quelques minutes (1-3 minutes) à des températures voisines de 40-50 °C dans un bain de soude à 5 % massique éventuellement en présence d'agents tensioactifs.

La composition de couche supérieure peut être déposée sur la couche inférieure du revêtement anti-abrasion selon les mêmes techniques que la composition de couche inférieure et peut être durcie par voie thermique dans les mêmes conditions qu'elle.

Selon une deuxième variante du procédé, la composition de couche inférieure est seulement partiellement durcie par voie thermique avant le dépôt de la composition de couche supérieure, au cours de l'étape c). Cette étape, qui peut être qualifiée de pré-polymérisation ou pré-cuisson, est généralement effectuée à une température de 70 à 120 °C, de préférence 80 à 120 °C, mieux 85-110 °C, encore mieux 90-100 °C, pendant un temps relativement court, typiquement 1 à 30 minutes, mieux 3 à 20 minutes et encore mieux 5-10 minutes.

De façon inattendue, les présents inventeurs ont constaté qu'un temps de cuisson trop élevé pouvait entraîner une diminution des propriétés de résistance à l'abrasion du revêtement final.

La deuxième variante du procédé de l'invention permet de s'affranchir de façon surprenante de l'étape de préparation de surface intermédiaire précédemment décrite entre le dépôt de la couche inférieure et celui de la couche supérieure, ce qui est particulièrement avantageux en termes de mise en oeuvre sur le plan industriel. Malgré la suppression de l'étape intermédiaire de préparation de la surface de la couche inférieure, une très bonne adhérence est obtenue dans le produit final entre les deux couches du revêtement anti-abrasion.

Ainsi, selon la deuxième variante du procédé, la surface de l'article résultant de l'étape c) n'est pas soumise avant l'étape d) à un traitement de préparation de surface et la composition de couche supérieure peut être déposée directement sur la couche inférieure du revêtement anti-abrasion résultant de l'étape c), selon les mêmes techniques qu'exposées précédemment.

La composition de couche supérieure peut alors être durcie par voie thermique de façon préférentielle à une température de 80 à 150 °C, de préférence 90-120 °C, pendant généralement 30 minutes à 4 heures, ce qui achève également le durcissement de la composition de couche inférieure.

Lorsqu'une couche supplémentaire de revêtement anti-abrasion et/ou anti-rayures doit être déposée sur la couche supérieure du revêtement bicouche de l'invention, les étapes e) et f) du procédé selon l'invention deviennent :

e) durcir au moins partiellement ladite composition de couche supérieure par voie thermique;
e1) déposer sur la couche résultant de l'étape précédente une couche de composition de couche supplémentaire anti-abrasion et/ou anti-rayures telle que définie précédemment;
e2) durcir ladite composition de couche supplémentaire par voie thermique;
f) récupérer un article d'optique comprenant un substrat ayant une surface principale revêtue d'un revêtement anti-abrasion et anti-rayures composé d'une couche inférieure adhérant à une couche supérieure, et revêtu d'une couche supplémentaire de revêtement anti-abrasion et/ou anti-rayures adhérant à ladite couche supérieure.

Ladite couche supérieure peut être soumise à un traitement de préparation de surface avant l'étape de dépôt à sa surface de la composition de couche supplémentaire. Ce traitement d'activation physique ou chimique, destiné à augmenter l'adhésion de la couche supplémentaire, peut être choisi, sans limitation, parmi les traitements d'activation de la couche inférieure décrits ci-dessus.

Selon une première variante, la composition de couche supérieure est complètement durcie par voie thermique avant le dépôt de la composition de couche supplémentaire anti-abrasion et/ou anti-rayures. Son durcissement est mis en oeuvre de façon préférentielle à une température de 80 à 150 °C, de préférence 90-120 °C, pendant généralement 30 minutes à 4 heures.

Selon une deuxième variante, ladite composition de couche supérieure peut être seulement partiellement durcie par voie thermique avant le dépôt de la composition de couche supplémentaire. Cette étape, qui peut être qualifiée de pré-polymérisation ou pré-cuisson, est généralement effectuée à une température de 80 à 120 °C, de préférence 85-110 °C, mieux 90-100 °C, pendant un temps relativement court, typiquement 1 à 30 minutes, mieux 3 à 20 minutes et encore mieux 5-10 minutes. Selon cette deuxième variante, la surface de la couche supérieure du revêtement bicouche de l'invention n'est de préférence pas soumise avant l'étape de dépôt de la couche supplémentaire anti-abrasion et/ou

anti-rayures à un traitement de préparation de surface et la composition de couche supplémentaire peut être déposée directement sur la couche supérieure du revêtement bicouche.

Malgré la suppression de l'étape intermédiaire de préparation de la surface de la couche inférieure, une très bonne adhérence est obtenue dans le produit final entre la couche supérieure du revêtement anti-abrasion et ladite couche supplémentaire.

La composition de couche supplémentaire peut alors être durcie par voie thermique de façon préférentielle à une température de 80 à 150 °C, de préférence 90-120 °C, pendant généralement 30 minutes à 4 heures, ce qui achève également le durcissement des compositions de couche supérieure et éventuellement inférieure.

La composition de couche supplémentaire anti-abrasion et/ou anti-rayures peut être déposée selon toute technique appropriée, par exemple par trempage, centrifugation, pulvérisation, arrosage ou application à la brosse ou au rouleau, de préférence par trempage ou centrifugation.

L'article d'optique comprenant un substrat sur lequel est formé le revêtement anti-abrasion et anti-rayures de l'invention peut également être un support temporaire, sur lequel ledit revêtement est stocké, en attente d'un transfert sur un autre substrat, qui est généralement le substrat définitif, tel qu'un substrat de lentille ophtalmique. Dans ce cas, la couche inférieure et la couche supérieure du revêtement bicouche doivent être déposées sur le support temporaire dans l'ordre inverse par rapport à l'ordre d'empilement souhaité sur le support définitif.

L'invention concerne ainsi également un procédé de préparation d'un article d'optique résistant à l'abrasion et aux rayures tel que défini ci-dessus, comprenant au moins les étapes suivantes :

a) fournir un support temporaire ayant au moins une surface principale;
b) déposer sur une surface principale du support une couche de composition de couche supérieure telle que définie précédemment;
c) durcir au moins partiellement ladite composition de couche supérieure par voie thermique;
d) déposer sur la couche résultant de l'étape précédente une couche de composition de couche inférieure telle que définie précédemment;
e) durcir ladite composition de couche inférieure par voie thermique;
f) transférer les couches présentes sur la surface principale du support temporaire vers une surface principale du substrat d'un article d'optique;
g) récupérer un article d'optique comprenant un substrat ayant une surface principale revêtue d'un revêtement anti-abrasion et anti-rayures composé d'une couche inférieure adhérant à une couche supérieure.

Ledit support temporaire peut être rigide ou flexible, de préférence flexible. Il s'agit d'un support amovible, c'est-à-dire qu'il est destiné à être retiré une fois effectué le transfert du revêtement anti-abrasion et anti-rayures de l'invention sur le support qui est généralement le support définitif.

Le support temporaire peut être employé en ayant au préalable été revêtu d'une couche d'agent de démoulage destinée à faciliter le transfert. Cette couche peut éventuellement être éliminée à la fin de l'étape de transfert.

Les supports temporaires flexibles sont généralement des éléments fins de quelques millimètres d'épaisseur, de préférence de 0,2 à 5 mm, mieux de 0,5 à 2 mm, faits d'une matière plastique, de préférence un matériau thermoplastique.

Des films plus minces peuvent également être utilisés comme supports temporaires.

Des exemples de (co)polymères thermoplastiques pouvant être employés pour la fabrication du support temporaire sont les polysulfones, les poly(méth)acrylates aliphatiques, tels que le poly(méth)acrylate de méthyle, le polyéthylène, le polypropylène, le polystyrène, les copolymères à blocs SBM (styrène-butadiène-méthacrylate de méthyle), le sulfure de polyphénylène (PPS), les polyoxydes d'arylène, les polyimides, les polyesters, les polycarbonates tels que le polycarbonate de bisphénol A, le polychlorure de vinyle, les polyamides tels que les nylons, leurs copolymères et leurs mélanges. Le matériau thermoplastique préféré est le polycarbonate.

La surface principale du support temporaire peut comprendre un empilement d'un ou plusieurs revêtements fonctionnels (déjà décrits) qui seront transférés en même temps que le revêtement anti-abrasion et anti-rayures de l'invention sur le support définitif, en particulier une couche supplémentaire anti-abrasion et/ou anti-rayures telle que définie précédemment. Bien évidemment, les revêtements devant être transférés ont été déposés sur le support temporaire dans l'ordre inverse par rapport à l'ordre d'empilement souhaité sur le support définitif.

Par ailleurs, d'autres revêtements fonctionnels peuvent être formés sur la couche inférieure du revêtement bicouche avant de procéder au transfert.

L'invention concerne également un procédé de transfert du revêtement anti-abrasion et anti-rayures de l'invention (ou d'un empilement de revêtements comprenant ledit revêtement anti-abrasion et anti-rayures) du support temporaire vers un substrat définitif.

Le transfert du ou des revêtements portés par le support temporaire peut être réalisé selon toute technique appropriée connue de l'homme du métier.

Il est également possible, au lieu de le transférer, de coller sur le substrat définitif le revêtement anti-abrasion et anti-rayures ayant été formé sur un support temporaire, le support étant alors intégré sur le substrat définitif.

Les variantes du procédé de dépôt classique peuvent être adaptées au procédé incluant une étape de transfert. Ainsi, par exemple, la composition de couche supérieure peut être complètement durcie par voie thermique avant le dépôt de la composition de couche inférieure, la couche supérieure peut être soumise à un traitement de préparation de surface avant l'étape de dépôt à sa surface de la composition de couche inférieure, et la composition de couche supérieure peut être seulement partiellement durcie par voie thermique avant le dépôt de la composition de couche inférieure.

En outre, les deux couches du revêtement anti-abrasion et anti-rayures bicouche de l'invention peuvent être transférées séparément vers un substrat, de même que tout autre revêtement tel qu'une couche supplémentaire anti-abrasion et/ou anti-rayures.

Les exemples suivants illustrent l'invention de façon plus détaillée mais non limitative. Sauf indication contraire, tous les pourcentages exprimés sont des pourcentages massiques.

## EXEMPLES

1. Procédures générales

Les articles d'optique employés dans les exemples '1-8 et 11-15 comprennent un substrat de lentille ORMA® ESSILOR de 65 mm de diamètre, de puissance -2,00 dioptries et d'épaisseur 1,2 mm, dont la face convexe est successivement revêtue :

- optionnellement d'une couche de 1 µm d'épaisseur d'un primaire anti-chocs de nature polyuréthane à base de Witcobond® 234 éventuellement chargé (exemples 15,19, 21, 22);
- optionnellement d'une couche de 2,5 µm d'épaisseur d'un revêtement monocouche anti-abrasion et/ou anti-rayures additionnel à base d'un hydrolysat d'époxysilane (uniquement l'exemple 18). La constitution et le mode de préparation de ce revêtement sont décrits plus en détail ci-dessous;
- d'un revêtement anti-abrasion et anti-rayures bicouche conforme à l'invention, dans lequel le gradient de dureté est obtenu par augmentation du taux de TEOS entre la couche anti-abrasion inférieure et la couche anti-abrasion supérieure;
- optionnellement d'une couche supplémentaire de revêtement anti-abrasion et/ou anti-rayures (exemple 20); et
- optionnellement d'un revêtement anti-reflets composé d'un empilement de quatre couches $ZrO_2/SiO_2/ZrO_2/SiO_2$ formées par évaporation sous vide, d'épaisseurs respectives 27, 21, 80 et 81 nm (uniquement les exemples 1, 2, 4, 5).

Les exemples 9, 10, 16 et 17 sont des exemples comparatifs mettant en jeu des compositions de couche inférieure et/ou supérieure non-conformes à l'invention.

a) Préparation des compositions de couches anti-abrasion inférieures

**Composition de couche inférieure A :**

On fait tomber goutte à goutte 180g d'acide chlorhydrique 0,1 N dans une solution qui contient 280g de Glymo et 150g de tétraéthoxysilane (TEOS). Lors de l'hydrolyse, la température monte jusqu'à 45°C. La solution hydrolysée est agitée 24 heures à température ambiante puis on ajoute 45g d'acide itaconique, 14g de N-cyanoguanidine, 330g de méthanol et 1,5g de tensioactif FC 430 afin d'améliorer la capacité d'étalement de cette formulation. L'extrait sec théorique (EST) de cette composition est de l'ordre de 30% en masse.

**Composition de couche inférieure A1:**

On fait tomber goutte à goutte 102,8g d'acide chlorhydrique 0,1 N dans un bécher qui contient 385,8g de Glymo. Lors de l'hydrolyse, la température monte jusqu'à 40-42°C. La solution hydrolysée est agitée 24 heures à température ambiante puis on ajoute 61,6g d'acide itaconique, 15,4g de N-cyanoguanidine, 432,9g de méthanol et 1,5g de tensioactif FC 430. L'extrait sec théorique (EST) de cette composition est d'environ 35% massique.

**Composition de couche inférieure A2 :**

On fait tomber goutte à goutte 101,8g d'acide chlorhydrique 0,1N dans un bécher qui contient 445,2g de Glymo. Lors de l'hydrolyse, la température monte jusqu'à 43°C. La solution hydrolysée est agitée 24 heures à température

ambiante puis on ajoute 18,9g d'acétylacétonate d'aluminium, 333g de méthanol et 1,5g de tensioactif FC 430. L'extrait sec théorique (EST) de cette composition est de 35% environ en masse.

**Composition de couche inférieure A3 :**

On fait tomber goutte à goutte 151,5g d'acide chlorhydrique 0,1 N dans une solution qui contient 365g de Glymo et 196,6g de tétraéthoxysilane (TEOS). Lors de l'hydrolyse, la température monte jusqu'à 42°C. La solution hydrolysée est agitée 24 heures à température ambiante puis on ajoute 18,9g d'acétylacétonate d'aluminium, 166,6g de méthanol et 1,35g de tensioactif FC 430. L'extrait sec théorique (EST) de cette composition est de l'ordre de 35% en masse.

**Composition de couche inférieure A4 (composition comparative) :**

On fait tomber goutte à goutte 64g d'acide chlorhydrique 0,1 N dans 183g de Glymo sous agitation. Lors de l'hydrolyse, la température monte jusqu'à 46°C. Au bout de 30 minutes, la température de l'hydrolysat est redescendue à 28 °C, et on ajoute alors goutte à goutte 91 g de DMDES (diméthyldiéthoxysilane). Cet ajout est légèrement exothermique (29°C).

La solution hydrolysée est agitée 24 heures à température ambiante puis on ajoute 583,3g de dispersion de silice colloïdale Suncolloid MAST de la société NISSAN, à 30% d'extrait sec dans le méthanol, 10,5g d'acétylacétonate d'aluminium, 31,5g de méthyl éthyl cétone, 35,2g de méthanol et 1,5g de tensioactif FC 430. L'extrait sec théorique (EST) de cette composition est de 35% en masse.

**Composition de couche inférieure A5 :**

On fait tomber goutte à goutte 2,15g d'acide phosphorique (pureté : 99%) dans une solution qui contient 271,3g de Glymo et 166,4g de TEOS. Lors de l'hydrolyse, la température monte jusqu'à 45°C. La solution hydrolysée est agitée 24 heures à température ambiante puis on ajoute 9,6g de N-cyanoguanidine, 239,3g d'eau désionisée, 110,4 g de 1-méthoxypropan-2-ol commercialisé sous le nom DOWANOL PM® par Dow Chemical et 0,8g de tensioactif EFKA® 3034 (Ciba Specialty Chemicals) afin d'améliorer la capacité d'étalement de cette formulation. L'extrait sec théorique (EST) de cette composition est de 31,2% en masse.

Remarque : dans l'essai comparatif 16, la composition A5 a été employée en tant que composition de couche supérieure.

**Composition de couche inférieure A6 :**

On fait tomber goutte à goutte 77,6g d'acide chlorhydrique 0,1 N dans un bécher qui contient 339,2g de Glymo. Lors de l'hydrolyse, la température monte jusqu'à 40-42°C. La solution hydrolysée est agitée 24 heures à température ambiante puis on ajoute 10,8g d'acide itaconique, 3,4g de N-cyanoguanidine, 367,9g de méthanol et 1,2g de tensioactif EFKA® 3034 (Ciba Specialty Chemicals). L'extrait sec théorique (EST) de cette composition est de 31,35% massique.

**Composition de couche inférieure A7:**

On fait tomber goutte à goutte 102,4g d'acide chlorhydrique 0,1 N dans un bécher qui contient 224g de Glymo et 120g de TEOS. Lors de l'hydrolyse, la température monte jusqu'à 45°C. La solution hydrolysée est agitée 24 heures à température ambiante puis on ajoute 36g d'acide itaconique, 11,2g de N-cyanoguanidine, 264g de méthanol et 0,8g de tensioactif EFKA® 3034 (Ciba Specialty Chemicals). L'extrait sec théorique (EST) de cette composition est de 30% massique.

**Composition de couche inférieure A8:**

La composition est obtenue en mélangeant les composants figurant dans le tableau ci-après. La couche résultante présente un indice de réfraction élevé en raison de la présence du colloïde de titane.

| Constituants | En grammes |
|---|---|
| Slymo<br>TEOS | 174,88<br>95,36 |

(suite)

| Constituants | En grammes |
|---|---|
| HCl 0.1N | 71,99 |
| colloïde de particules composites de $TiO_2/SiO_2/ZrO_2$ (20% massique, société CCIC) | 609,61 |
| $Al(Acac)_3$ | 9,08 |
| Méthyl éthyl cétone | 27,23 |
| Méthanol | 9,36 |
| EFKA® 3034 | 1,50 |

b) Préparation des compositions de couches anti-abrasion supérieures

**Composition de couche supérieure B :**

On fait tomber goutte à goutte 130,5g d'acide chlorhydrique 0,1 N dans une solution qui contient 126,1g de Glymo et 294,4g de TEOS. Lors de l'hydrolyse, la température monte jusqu'à 49°C. La solution hydrolysée est agitée 24 heures à température ambiante puis on ajoute 20,8g d'acide itaconique, 5g de N-cyanoguanidine, 423,1g de méthanol et 1,5g de tensioactif FC 430 afin d'améliorer la capacité d'étalement de cette formulation. L'extrait sec théorique (EST) de cette composition est de l'ordre de 20% en masse.

**Composition de couche supérieure B1:**

On fait tomber goutte à goutte 152,3g d'acide chlorhydrique 0,1 N dans une solution qui contient 141,3g de Glymo et 346,7g de TEOS. Lors de l'hydrolyse, la température monte jusqu'à 47°C. La solution hydrolysée est agitée 24 heures à température ambiante puis on ajoute 12g d'acétylacétonate d'aluminium, 346g de méthanol et 1,5g de tensioactif FC 430 afin d'améliorer la capacité d'étalement de cette formulation. L'extrait sec théorique (EST) de cette composition est de 20% en masse.

**Composition de couche supérieure B2 (composition comparative) :**

On fait tomber goutte à goutte 29,1 g d'acide chlorhydrique 0,1N dans une solution qui contient 127,2g de Glymo. Lors de l'hydrolyse, la température monte jusqu'à 45°C. La solution hydrolysée est agitée 24 heures à température ambiante puis on ajoute 366,7g de dispersion de silice colloïdale. Suncolloid MAST de la société NISSAN, à 30% d'extrait sec dans le méthanol, 6,3g d'acétylacétonate d'aluminium, 18,9g de méthyl éthyl cétone, 450,4g de méthanol et 1,5g de tensioactif FC 430. L'extrait sec théorique (EST) de cette composition est de 20% en masse.

**Composition de couche supérieure B3:**

On fait tomber goutte à goutte 2,43g d'acide phosphorique (pureté : 99%) dans une solution qui contient 169,6g de Glymo et 277,4g de TEOS. Lors de l'hydrolyse, la température monte jusqu'à 45°C. La solution hydrolysée est agitée 24 heures à température ambiante puis on ajoute 9,6g de N-cyanoguanidine, 269,5g d'eau désionisée, 72,3 g de 1-méthoxypropan-2-ol commercialisé sous le nom DOWANOL PM® par Dow Chemical et 0,8g de tensioactif EFKA® 3034 (Ciba Specialty Chemicals) afin d'améliorer la capacité d'étalement de cette formulation. L'extrait sec théorique (EST) de cette composition est de 26% en masse.

Remarque: dans l'essai comparatif 17, la composition B3 a été employée en tant que composition de couche inférieure.

**Composition de couche supérieure B4 (composition comparative) :**

On fait tomber goutte à goutte 2,45g d'acide phosphorique (pureté : 99%) dans une solution qui contient 90,4g de Glymo et 332,9g de TEOS. Lors de l'hydrolyse, la température monte jusqu'à 45°C. La solution hydrolysée est agitée 24 heures à température ambiante puis on ajoute 9,6g de N-cyanoguanidine, 271,7g d'eau désionisée, 95,3 g de 1-méthoxypropan-2-ol commercialisé sous le nom DOWANOL PM® par Dow Chemical et 0,8g de tensioactif EFKA® 3034 (Ciba Specialty Chemicals) afin d'améliorer la capacité d'étalement de cette formulation. L'extrait sec théorique (EST) de cette composition est de 20,8% en masse.

**Composition de couche supérieure B5 :**

On fait tomber goutte à goutte 1,92g d'acide phosphorique (pureté : 99%) dans une solution qui contient 102,4g de Glymo et 249,6g de TEOS. Lors de l'hydrolyse, la température monte jusqu'à 45°C. La solution hydrolysée est agitée 24 heures à température ambiante puis on ajoute 5,6g de N-cyanoguanidine, 219,2g d'eau désionisée, 220,5 g de 1-méthoxypropan-2-ol commercialisé sous le nom DOWANOL PM® par Dow Chemical et 0,8g de tensioactif EFKA® 3034 (Ciba Specialty Chemicals) afin d'améliorer la capacité d'étalement de cette formulation. L'extrait sec théorique (EST) de cette composition est de 18% en masse.

c) Procédures de dépôt du revêtement anti-abrasion bicouche

**Mode opératoire 1**

Un substrat de lentille ophtalmique ORMA® (éventuellement revêtu d'une couche de primaire, exemple 15) est revêtu par trempage avec une composition de couche inférieure. On règle la vitesse de démouillage de ces lentilles de telle façon que l'épaisseur déposée soit de 3,5μm. La composition de couche inférieure est alors polymérisée en étuve pendant 3h à 100°C.

Après cette polymérisation, la lentille revêtue de la couche anti-abrasion inférieure est soumise à un traitement de préparation de surface intermédiaire ayant pour but d'activer la surface de la couche anti-abrasion inférieure afin de faciliter l'accrochage de la couche anti-abrasion supérieure.

Puis la lentille est revêtue par dip-coating avec une composition de couche supérieure, en réglant la vitesse de démouillage de façon à obtenir une épaisseur déposée de 1μm. Cette composition de couche supérieure est ensuite polymérisée en étuve pendant 3h à 100°C.

**Mode opératoire 2**

Un substrat de lentille ophtalmique ORMA® est revêtu par trempage avec une composition de couche inférieure. On règle la vitesse de démouillage de ces lentilles de telle façon que l'épaisseur déposée soit de 3,5μm. La composition de couche inférieure est alors pré-polymérisée en étuve pendant 10 min à 90°C.

Puis la lentille refroidit pendant 15 minutes à température ambiante et est alors directement revêtue par dip-coating avec une composition de couche supérieure en réglant la vitesse de démouillage de façon à obtenir une épaisseur déposée de 1μm.

Cette composition de couche supérieure est ensuite polymérisée en étuve pendant 3h à 100°C ce qui achève également la polymérisation de la composition de couche inférieure.

**Mode opératoire 3**

Identique au mode opératoire 2, hormis l'étape de pré-polymérisation de la couche inférieure qui est effectuée pendant 15 min à 90 °C.

**Mode opératoire 4**

Identique au mode opératoire 2, hormis l'étape de pré-polymérisation de la couche inférieure qui est effectuée pendant 5 min à 100 °C.

**Mode opératoire 5**

Identique au mode opératoire 2, hormis l'étape de pré-polymérisation de la couche inférieure qui est effectuée pendant 10 min à 100 °C.

**Mode opératoire 6**

Identique au mode opératoire 2, hormis l'étape de pré-polymérisation de la couche inférieure qui est effectuée à 100 °C pendant 30 min, et l'étape de polymérisation qui est conduite à 100°C pendant 30 minutes.

En outre, la vitesse de démouillage des lentilles est réglée de telle façon que l'épaisseur de composition de couche inférieure déposée soit de 3μm et que l'épaisseur de composition de couche supérieure déposée soit de 1.5μm.

**Mode opératoire 7**

Identique au mode opératoire 6, excepté qu'avant le dépôt de la composition de couche inférieure, le substrat de lentille ophtalmique ORMA® est revêtu par trempage d'une monocouche de revêtement anti-abrasion et/ou anti-rayures additionnel (vitesse de démouillage de la lentille réglée de telle façon que l'épaisseur déposée soit de 2,5μm), qui est pré-polymérisée en étuve pendant 30 min à 100°C.

En outre, la vitesse de démouillage des lentilles est réglée de telle façon que l'épaisseur de composition de couche inférieure déposée soit de 2μm et que l'épaisseur de composition de couche supérieure déposée soit de 1.5μm.

Ledit revêtement anti-abrasion et/ou anti-rayures monocouche additionnel est formé à partir d'une composition obtenue de la façon suivante :

On fait tomber goutte à goutte 77,6g d'acide chlorhydrique 0,1 N dans un bécher qui contient 339,2g de Glymo. Lors de l'hydrolyse, la température monte jusqu'à 40-42°C. La solution hydrolysée est agitée 24 heures à température ambiante puis on ajoute 10,8g d'acide itaconique, 3,4g de N-cyanoguanidine, 367,9g de méthanol et 1,2g de tensioactif EFKA® 3034 (Ciba Specialty Chemicals). L'extrait sec théorique (EST) de cette composition est de 31,35% massique.

**Mode opératoire 8**

Identique au mode opératoire 2, excepté qu'avant le dépôt de la composition de couche inférieure, le substrat de lentille ophtalmique ORMA® est revêtu par trempage d'une couche de primaire anti-chocs de 0,8μm d'épaisseur, pré-polymérisée pendant 30 minutes à 90 °C.

La couche de primaire est formée à partir d'une composition préparée en mélangeant successivement 225,7g du latex polyuréthane Witcobond® 234, 774,4g d'eau déminéralisée, 370,8g de charges colloïdales HX305 W1 (colloïde de $SnO_2$) commercialisées par la société CCIC, et 3g du tensioactif Silwet L-77®. L'extrait sec théorique de cette composition de primaire est de 20%.

En outre, la vitesse de démouillage des lentilles est réglée de telle façon que l'épaisseur de composition de couche inférieure déposée soit de 3μm et l'étape de pré-potymérisation de la couche inférieure est effectuée à 90°C pendant 30 min.

**Mode opératoire 9**

Un substrat de lentille ophtalmique ORMA® est revêtu par trempage avec une composition de couche inférieure. On règle la vitesse de démouillage de ces lentilles de telle façon que l'épaisseur déposée soit de 2,5μm. La composition de couche inférieure est alors pré-polymérisée en étuve pendant 30 min à 100°C.

Puis la lentille refroidit pendant 15 minutes à température ambiante et est alors directement revêtue par trempage avec une composition de couche supérieure en réglant la vitesse de démouillage de façon à obtenir une épaisseur déposée de 1,5μm. La composition de couche supérieure est ensuite pré-polymérisée en étuve pendant 30 min à 90 °C.

La lentille est refroidie pendant 15 minutes à température ambiante et est alors directement revêtue par trempage d'une couche supplémentaire de revêtement anti-abrasion et/ou anti-rayures (vitesse de démouillage de la lentille réglée de telle façon que l'épaisseur déposée soit de 1μm), ce dépôt étant suivi d'une étape finale de polymérisation de l'ensemble conduite à 90°C pendant 30 minutes.

La couche supplémentaire de revêtement anti-abrasion et/ou anti-rayures monocouche est formée à partir d'une composition obtenue de la façon suivante :

On fait tomber goutte à goutte 2,45g d'acide phosphorique (pureté : 99%) dans une solution qui contient 90,4g de Glymo et 332,9g de TEOS. Lors de l'hydrolyse, la température monte jusqu'à 45°C. La solution hydrolysée est agitée 24 heures à température ambiante puis on ajoute 9,6g de N-cyanoguanidine, 271,7g d'eau désionisée, 95,3 g de 1-méthoxypropan-2-ol commercialisé sous le nom DOWANOL PM® par Dow Chemical et 0,8g de tensioactif EFKA® 3034 (Ciba Specialty Chemicals) afin d'améliorer la capacité d'étalement de cette formulation. L'extrait sec théorique (EST) de cette composition est de 20,8% en masse.

**Mode opératoire 10 :**

Identique au mode opératoire 8, excepté que la couche de primaire est formée à partir d'une composition préparée en mélangeant successivement 171,81g du latex polyuréthane Witcobond® 234, 201,8g d'eau déminéralisée, 196,98g de charges colloïdale de silice LUDOX H540 (à 40% de teneur massique en silice), 531,2g d'eau déminéralisée et 1,844g du tensioactif Silwet L-77®. L'extrait sec théorique de cette composition de primaire est de 15%.

d) Procédures de pré-traitement de la surface de la couche anti-abrasion inférieure

**Préparation de surface sodique**

Les lentilles revêtues de la couche anti-abrasion inférieure sont immergées dans un bain de soude à 5% massique à la température de 50 °C (sauf essais 1 et 15, 40°C), équipé d'ultrasons, pendant 1 minute. Elles sont ensuite rincées dans de l'eau déminéralisée puis séchées.

**Préparation de surface plasma**

Les lentilles revêtues de la couche anti-abrasion inférieure sont soumises à un traitement plasma oxygène (puissance 1200W pendant 4,5 minutes, débit $O_2$ : 200mL / min, pression 0,2 bar).

**Préparation de surface corona**

Les lentilles revêtues de la couche anti-abrasion inférieure sont soumises à un traitement corona (distance entre le verre et l'électrode 1cm à 2cm, temps de traitement 10 secondes, puissance de l'émetteur 100W).

2. Caractérisations

Pour l'appréciation des propriétés des verres revêtus obtenus dans les exemples, on a mesuré la résistance à l'abrasion, par la valeur obtenue au test BAYER ISTM, la résistance aux rayures par le test de la paille de fer, et l'adhérence du revêtement anti-abrasion au moyen d'un "cross-hatch test".
Une valeur élevée au test BAYER ISTM indique un degré élevé de résistance à l'abrasion, alors qu'une valeur faible au test de la paille de fer indique un degré élevé de résistance aux rayures.
Les trois tests pratiqués sont décrits ci-dessous.

a) Caractérisation de la résistance à l'abrasion : Test Baver ISTM (Baver alumine)

La résistance à l'abrasion a été évaluée par détermination de valeurs BAYER ISTM sur des substrats revêtus du revêtement anti-abrasion de l'invention ou d'un revêtement anti-abrasion comparatif, sur des substrats revêtus du revêtement anti-abrasion de l'invention et d'un revêtement anti-reflets (exemples 1, 2, 4, 5), sur des substrats revêtus d'un revêtement de primaire et du revêtement anti-abrasion de l'invention (exemples 15, 19, 21, 22), sur des substrats revêtus d'un revêtement anti-abrasion et/ou anti-rayures additionnel et du revêtement anti-abrasion bicouche de l'invention (exemple 18), ou sur des substrats revêtus du revêtement anti-abrasion bicouche de l'invention et d'une couche supplémentaire de revêtement anti-abrasion et/ou anti-rayures (exemple 20).
La détermination de cette valeur BAYER a été établie en suivant la norme ASTM F735-81, avec les modifications suivantes : 300 cycles ont été réalisés au lieu de 200 et la poudre abrasive n'est pas du sable mais de l'alumine ($Al_2O_3$) ZF 152412 fournie par la société Ceramic Grains (anciennement Norton Materials, New Bond Street, PO Box 15137 Worcester, Mass. 01615-00137).
Ce test consiste à agiter simultanément un verre échantillon et un verre étalon d'un mouvement alternatif déterminé dans un bac contenant la poudre abrasive (approximativement 500 g) de granulométrie définie à une fréquence de 100 cycles/minute pendant 3 minutes. La mesure de diffusion H "avant / après" du verre échantillon est comparée à celle d'un verre étalon, en l'occurrence un verre nu à base de CR-39®, pour lequel la valeur BAYER ISTM est fixée à 1. La valeur Bayer ISTM est R = H étalon/H verre échantillon.
Les mesures de diffusion ont été effectuées en utilisant un système Hazeguard modèle XL-211 produit par Pacific Scientific.
La valeur Bayer ISTM est qualifiée de bonne lorsque R est supérieur ou égal à 3 et inférieur à 4,5, et d'excellente pour des valeurs de 4,5 et plus.

b) Caractérisation de la dureté - résistance aux rayures (test Pdf manuel)

La résistance aux rayures a été mesurée grâce le test à la paille de fer (pdf, ou test à la laine d'acier), qui consiste à effectuer 5 aller-retour en frottant manuellement avec une amplitude de 4 à 5 cm la face d'un verre revêtue conformément à l'invention avec une paille de fer, dans le sens des fibres, tout en appliquant une pression constante sur la paille de fer lors de cette opération (5 kg durant l'aller, 2,5 kg durant le retour). Ici, un morceau d'environ 3 cm sur 3 cm de laine d'acier extra fine STARWAX (grade 000) plié sur lui-même a été employé.
Le verre est ensuite essuyé avec un chiffon sec, rincé à l'alcool, puis inspecté visuellement. On attribue une

notation en fonction de la graduation suivante (comportant 3 notes : 1, 3 ou 5) :

1 : aucune rayure observée ou verre très peu rayé (1 à 10 rayures)
3 : verre assez rayé (11 à 50 rayures)
5 : verre très rayé (nombre de rayures supérieur à 50)

c) Caractérisation de l'adhérence du revêtement anti-abrasion ("cross-hatch test")

Le test d'adhérence a été effectué suivant la norme ASTM D3359-93 et conduit à un classement qualitatif allant de 0 à 5, 0 étant le meilleur résultat.
Il consiste à entailler le revêtement anti-abrasion bicouche de l'invention déposé sur un substrat à l'aide d'un cutter, suivant un réseau quadrillé de lignes d'incision, à appliquer un ruban adhésif sur le revêtement ainsi quadrillé et à essayer de l'arracher à l'aide de celui-ci. Les résultats sont considérés comme bons au degré zéro lorsque les bords des incisions pratiquées demeurent parfaitement lisses, et qu'aucun des carrés qu'elles délimitent ne s'est détaché.
Ce test d'adhérence peut également être réalisé après que le substrat de lentille revêtu du revêtement anti-abrasion bicouche de l'invention a été plongé dans un bain d'eau bouillante pendant 30 minutes.

3. Résultats

Les performances en termes de résistance à l'abrasion et aux rayures des différents articles d'optique préparés sont présentées dans le Tableau 1. Les résultats des essais comparatifs apparaissent en gras.

**Tableau 1**

| Exemple | 1 | 2 | 3 | 4 | 5 | 6 | 7 | 8 | **9** | **10** | 11 | 12 | 13 | 14 | 15* | **16** | **17** | 18 | 19* | 20 | 21* | 22* |
|---|---|---|---|---|---|---|---|---|---|---|---|---|---|---|---|---|---|---|---|---|---|---|
| **Composition de couche inférieure** | A | A | A | A1 | A2 | A3 | A | A1 | **A** | **A4** | A | A | A | A | A | **A6** | **B3** | A7 | A7 | A5 | A7 | A8 |
| **Préparation de surface intermédiaire** | S | P | C | S | S | S | S | S | **S** | **S** | - | - | - | - | S | - | - | - | - | - | - | - |
| **Composition de couche supérieure** | B | B | B | B | B | B | B1 | B1 | **B2** | **B2** | B | B | B | B | B | **A5** | **B4** | B5 | B5 | B3 | B5 | B5 |
| **Revêtement AR** | oui | oui | non | oui | oui | non | non | non | **non** | **non** | non | non | non | non | non | non | non | non | non | non | non | non |
| **Ri** | 4,7 | 4,7 | 4,7 | + ∞ | + ∞ | 4,6 | 4,7 | + 00 | **4,7** | **+ ∞** | 4,7 | 4,7 | 4,7 | 4,7 | 4,7 | **+ ∞** | **1,5** | 4,6 | 4,6 | 4 | 4,6 | 4,5 |
| **Rs** | 1,05 | 1,05 | 1,05 | 1,05 | 1,05 | 1,05 | 1,05 | 1,05 | **+ ∞** | **+ ∞** | 1,05 | 1,05 | 1,05 | 1,05 | 1,05 | **4** | **0,67** | 1 | 1 | 1,5 | 1 | 1 |
| **Mode opératoire de dépôt du revêtement anti-abrasion** | 1 | 1 | 1 | 1 | 1 | 1 | 1 | 1 | **1** | **1** | 2 | 3 | 4 | 5 | 1 | **6** | **6** | 7 | 8 | 9 | 10 | 8 |
| **Test Bayer ISTM sans revêtement AR** | 19,2 | 12,6 | 9,8 | 15,8 | 17,1 | 8,1 | 7,6 | 9,1 | **6,4** | **5,2** | 16,5 | 13,5 | 18,2 | 14,2 | 19,4 | **0,9** | **6,6** | 12,5 | 12,2 | 11,7 | 12,7 | 9,7 |
| **Test Pdf sans revêtement AR** | 1 | 1 | 1 | 1 | 1 | 1 | 1 | 3 | **1** | **3** | 1 | 1 | 1 | 1 | 1 | | | | 3 | | 3 | 3 |
| **Test Bayer ISTM avec revêtement AR** | 11,2 | 4,8 | | 6,1 | 5,8 | | | | | | | | | | | | | | 10 | | | |
| S = sodique, P = plasma, C = corona. AR = anti-reflets. * Substrat préalablement revêtu d'une couche de primaire anti-chocs. | | | | | | | | | | | | | | | | | | | | | | |

Les revêtements anti-abrasion conformes à l'invention présentent des performances très supérieures à celles que l'on aurait obtenues si l'on avait utilisé un revêtement monocouche. Après le dépôt d'un revêtement anti-reflets sur le revêtement anti-abrasion, les performances sont également très supérieures à celles que l'on aurait obtenues si l'on avait utilisé un revêtement monocouche.

Les exemples 1-3 montrent qu'une préparation intermédiaire de surface sodique est préférable à un traitement plasma ou corona.

Les compositions A et B, qui contiennent un mélange de GLYMO et de TEOS et utilisent le système catalytique acide itaconique/*N*-cyanoguanidine, sont plus performantes que les compositions A3 et B1, dans lequel le catalyseur $Al(acac)_3$ est utilisé.

Les résultats des exemples comparatifs 9 et 10, qui utilisent de la silice colloïdale à la place du TEOS, sont très inférieurs en termes de résistance à l'abrasion et à la rayure. De même, les articles des exemples comparatifs 16 et 17, qui ne possèdent pas des ratios Rs et/ou Ri conformes à ceux de l'invention, présentent une faible résistance à l'abrasion.

Les tests d'adhérence pratiqués (cross hatch test) révèlent une très bonne adhérence (score de zéro) entre les couches, même après un passage des verres testés de 30 minutes dans de l'eau à 100°C, et ce, que l'on utilise la première variante du procédé de l'invention (exemples 1-8 et 15, avec préparation de surface intermédiaire) ou la deuxième variante du procédé de l'invention (exemples 11-14, sans préparation de surface intermédiaire). Dans le dernier cas, l'adhérence entre les deux couches du revêtement anti-abrasion est obtenue par pré-polymérisation de la couche inférieure.

L'introduction d'un revêtement de primaire ne modifie pas les propriétés de résistance à l'abrasion et aux rayures des articles d'optique (résultats des exemples 1, 15, 19, 21 et 22).

L'introduction d'un revêtement anti-abrasion supplémentaire entre le substrat et le revêtement bicouche de l'invention conduit aussi à des articles possédant une très bonne résistance à l'abrasion (exemple 18), de même que l'introduction d'une couche supplémentaire de revêtement anti-abrasion et/ou anti-rayures au contact de la couche supérieure du revêtement bicouche de l'invention (exemple 20).

Les exemples 19, 21 et 22 illustrent l'invention pour un empilement contenant un primaire chargé en colloïde ($SiO_2$ pour l'exemple 21 et $SnO_2$ pour les exemples 19 et 22) et la couche inférieure du revêtement bicouche elle-même chargée en colloïde (exemple 22).

## Revendications

1. Article d'optique comprenant un substrat ayant au moins une surface principale revêtue d'un revêtement anti-abrasion et anti-rayures, ledit revêtement étant composé, en partant du substrat, d'une couche inférieure et d'une couche supérieure adhérant entre elles, la couche supérieure étant une couche de composition de couche supérieure durcie et la couche inférieure étant une couche de composition de couche inférieure durcie,
**caractérisé en ce que** ladite composition de couche supérieure comprend :

- au moins un composé organosilane, ou hydrolysat de celui-ci, de formule:

$$R_nY_mSi(X)_{4-n-m} \qquad (I)$$

dans laquelle les groupes R, identiques ou différents, sont des groupes organiques monovalents liés au silicium par un atome de carbone et contenant au moins une fonction époxy, les groupes X, identiques ou différents, sont des groupes hydrolysables, Y est un groupe organique monovalent lié au silicium par un atome de carbone, n et m étant des entiers tels que n = 1 ou 2 avec n+m = 1 ou 2, et
- au moins un composé, ou hydrolysat de celui-ci, de formule :

$$M(Z)_x \qquad (II)$$

dans laquelle M désigne un métal ou un métalloïde, les groupes Z, identiques ou différents, sont des groupes hydrolysables et x, égal ou supérieur à 4, de préférence de 4 à 6 est la valence du métal ou métalloïde M, le ratio :

$$Rs = \frac{\text{masse de l' extrait sec théorique en composés I dans la composition de couche supérieure}}{\text{masse de l' extrait sec théorique en composés II dans la composition de couche supérieure}}$$

étant inférieur ou égal à 2,3,

et **en ce que** ladite composition de couche inférieure comprend :

- au moins un composé organosilane, ou hydrolysat de celui-ci, de formule :

$$R'_{n'}Y'_{m'}Si(X')_{4-n'-m'} \qquad (III)$$

dans laquelle les groupes R', identiques ou différents, sont des groupes organiques monovalents liés au silicium par un atome de carbone et contenant au moins une fonction époxy, les groupes X', identiques ou différents, sont des groupes hydrolysables, Y' est un groupe organique monovalent lié au silicium par un atome de carbone, n' et m' étant des entiers tels que n' = 1 ou 2 avec n'+m' = 1 ou 2, et
- optionnellement, au moins un composé, ou hydrolysat de celui-ci, de formule :

$$M'(Z')_y \qquad (IV)$$

dans laquelle M' désigne un métal ou un métalloïde, les groupes Z', identiques ou différents, sont des groupes hydrolysables et y, égal ou supérieur à 4, de préférence de 4 à 6 est la valence du métal ou métalloïde M', le ratio :

$$Ri = \frac{\textit{masse de l' extrait sec théorique en composés III dans la composition de couche inférieure}}{\textit{masse de l' extrait sec théorique en composés IV dans la composition de couche inférieure}}$$

étant supérieur à 2,3.

2. Article selon la revendication 1, **caractérisé en ce que** le composé (II) répond à la formule $Si(Z)_4$, dans laquelle les groupes Z, identiques ou différents, sont des groupes hydrolysables, et/ou **en ce que** le composé (IV) répond à la formule $Si'(Z')_4$, dans laquelle les groupes Z', identiques ou différents, sont des groupes hydrolysables.

3. Article selon l'une quelconque des revendications précédentes, **caractérisé en ce que** Rs est inférieur ou égal à 2,0, de préférence inférieur ou égal à 1,5, mieux inférieur ou égal à 1,25, et encore mieux inférieur ou égal à 1,1, et supérieur ou égal à 0,85, mieux supérieur ou égal à 0,9, encore mieux supérieur ou égal à 0,95.

4. Article selon l'une quelconque des revendications précédentes, **caractérisé en ce que** Ri est supérieur ou égal à 3,0, de préférence supérieur ou égal à 3,5, mieux supérieur ou égal à 4,5, encore mieux supérieur ou égal à 10.

5. Article selon l'une quelconque des revendications précédentes, **caractérisé en ce que** la masse de l'extrait sec théorique en composés I représente de 30 à 60 % de la masse de l'extrait sec de la composition de couche supérieure, mieux de 40 à 55 %.

6. Article selon l'une quelconque des revendications précédentes, **caractérisé en ce que** la masse de l'extrait sec théorique en composés III représente plus de 40 % de la masse de l'extrait sec de la composition de couche inférieure, mieux plus de 50 %, mieux encore plus de 60 % et de façon optimale plus de 65 %.

7. Article selon l'une quelconque des revendications précédentes, **caractérisé en ce que** la masse de l'extrait sec théorique en composés IV représente moins de 30 % de la masse de l'extrait sec de la composition de couche inférieure, mieux moins de 25 %, mieux encore moins de 20 % et de façon optimale moins de 10 %.

8. Article selon l'une quelconque des revendications précédentes, **caractérisé en ce que** l'épaisseur du revêtement anti-abrasion et anti-rayures varie de 1 à 15 μm, préférentiellement de 1 à 10 μm, mieux de 2 à 8 μm, et encore mieux de 3 à 6 μm.

9. Article selon l'une quelconque des revendications précédentes, **caractérisé en ce que** le ratio de l'épaisseur de la couche inférieure sur l'épaisseur de la couche supérieure est supérieur ou égal à 1,5, mieux supérieur ou égal à 2,0, et encore mieux supérieur ou égal à 3,0.

10. Article selon l'une quelconque des revendications précédentes, **caractérisé en ce que** les groupes hydrolysables X, X', Z, Z' sont choisis, indépendamment les uns des autres, parmi les groupes alcoxy $-O-R^1$, où $R^1$ désigne un groupe alkyle linéaire ou ramifié, de préférence en $C_1$-$C_4$, ou un groupe alcoxyalkyle, les groupes acyloxy $-O-C(O)R^3$ où $R^3$ est un groupe alkyle, préférentiellement en $C_1$-$C_6$, de préférence méthyle ou éthyle, les halogènes tels

que Cl et Br et les groupes amino éventuellement substitués par un ou deux groupes alkyle ou silane.

**11.** Article selon l'une quelconque des revendications précédentes, **caractérisé en ce que** les groupes Y ou Y' sont choisis, indépendamment les uns des autres, parmi les groupes alkyle en $C_1$-$C_4$, alcényle, aryle en $C_6$-$C_{10}$, méthacryloxyalkyle, acryloxyalkyle, fluoroalkyle, perfluoroalkyle, (poly)fluoro alcoxy[(poly)alkylènoxy]alkyle et perfluoro alcoxy[(poly)alkylènoxy]alkyle.

**12.** Article selon l'une quelconque des revendications précédentes, **caractérisé en ce que** les groupes R ou R' sont choisis, indépendamment les uns des autres, parmi les groupes de formules V et VI :

V 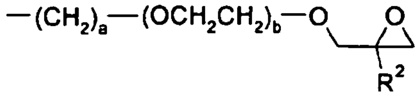

VI 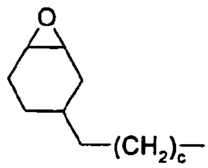

dans lesquelles $R^2$ est un groupe alkyle, de préférence un groupe méthyle, ou un atome d'hydrogène, a et c sont des nombres entiers allant de 1 à 6, et b représente 0, 1 ou 2.

**13.** Article selon la revendication 12, **caractérisé en ce que** les groupes R ou R' sont choisis, indépendamment les uns des autres, parmi les groupes γ-glycidoxypropyle, P-(3,4-époxycyclohexyl)éthyle et γ-glycidoxyéthoxypropyle, et représentent de préférence le groupe γ-glycidoxypropyle.

**14.** Article selon l'une quelconque des revendications précédentes, **caractérisé en ce que** les composés de formule I et/ou III sont choisis, indépendamment les uns des autres, parmi les composés de formules VII et VIII :

VII 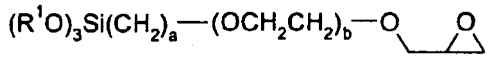

VIII 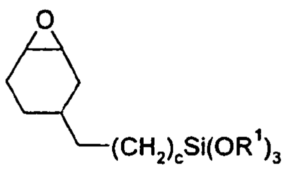

dans lesquelles $R^1$ est un groupement alkyle ayant de 1 à 6 atomes de carbone, préférentiellement un groupement méthyle ou éthyle, a et c sont des nombres entiers allant de 1 à 6, et b représente 0, 1 ou 2.

**15.** Article selon l'une quelconque des revendications précédentes, **caractérisé en ce que** les composés de formule **II** et/ou IV sont choisis, indépendamment les uns des autres, parmi les tétraalcoxysilanes, de préférence parmi le tétraéthoxysilane, le tétraméthoxysilane, le tétra(n-propoxy)silane, le tétra(i-propoxy)silane, le tétra(n-butoxy)silane, le tétra(sec-butoxy)silane et le tétra(t-butoxy)silane.

**16.** Article selon l'une quelconque des revendications précédentes, **caractérisé en ce que** les compositions de couche inférieure et/ou supérieure comprennent au moins un catalyseur de condensation et/ou au moins un catalyseur de durcissement.

**17.** Article selon la revendication 16, **caractérisé en ce que** le catalyseur de condensation est choisi parmi les acides ou anhydrides d'acides polyfonctionnels saturés ou insaturés, de préférence parmi l'acide maléique, l'acide itaconique, l'acide triméllitique et l'anhydride triméllitique

**18.** Article selon la revendication 16 ou 17, **caractérisé en ce que** le catalyseur de durcissement est choisi parmi les dérivés de l'imidazole et leurs sels d'imidazolium, la N-cyanoguanidine, les sels métalliques d'acétylacétone ayant pour formule $M(CH_3COCHCOCH_3)_n$, dans laquelle M représente un ion métallique, de préférence $Zn^{2+}$, $Co^{3+}$, $Fe^{3+}$ ou $Cr^{3+}$,et n est un entier allant de 1 à 3, le tétrathiocyanatodiamminechromate(III) d'ammonium, les composés à base d'aluminium, les carboxylates de métaux tels que le zinc, le titane, le zirconium, l'étain ou le magnésium, de préférence l'octoate de zinc ou l'octoate stanneux, les sels d'iodonium et les sels de sulfonium.

**19.** Article selon la revendication 18, **caractérisé en ce que** le composé à base d'aluminium est choisi parmi les chélates d'aluminium, les acylates et alcoolates d'aluminium(III), de préférence parmi l'acétylacétonate d'aluminium, le bisacétylacétonate d'aluminium mono(acétoacétate d'éthyle), le monoacétylacétonate d'aluminium bis(acétoacétate d'éthyle), le di-n-butoxy aluminium mono(acétoacétate d'éthyle) et le di-i-propoxy aluminium mono(acétoacétate d'éthyle).

**20.** Article selon l'une quelconque des revendications 1 à 15, **caractérisé en ce que** les compositions de couche inférieure et/ou supérieure comprennent un système catalytique composé d'acétylacétonate d'aluminium ou composé d'acide itaconique et de N-cyanoguanidine.

**21.** Article selon l'une quelconque des revendications précédentes, **caractérisé en ce que** les compositions de couche inférieure et/ou supérieure comprennent moins de 10 % en masse de charges par rapport à la masse totale de la composition, mieux n'en comprennent pas.

**22.** Article selon l'une quelconque des revendications précédentes, **caractérisé en ce qu'**il comprend, en partant du substrat, une couche de primaire anti-chocs revêtue par ledit revêtement anti-abrasion et anti-rayures, ladite couche de primaire comprenant de préférence des charges colloïdales.

**23.** Article selon l'une quelconque des revendications précédentes, **caractérisé en ce qu'**il comprend une couche supplémentaire de revêtement anti-abrasion et/ou anti-rayures au contact de ladite couche supérieure, la couche supplémentaire anti-abrasion et/ou anti-rayures étant une couche de composition de couche supplémentaire anti-abrasion et/ou anti-rayures durcie, ladite composition de couche supplémentaire comprenant :

- au moins un composé organosilane, ou hydrolysat de celui-ci, de formule :

$$R''_{n''}Y''_{m''}Si(X'')_{4-n''-m''} \qquad (IX)$$

dans laquelle les groupes R", identiques ou différents, sont des groupes organiques monovalents liés au silicium par un atome de carbone et contenant au moins une fonction époxy, les groupes X", identiques ou différents, sont des groupes hydrolysables, Y" est un groupe organique monovalent lié au silicium par un atome de carbone, n" et m" étant des entiers tels que n" = 1 ou 2 avec n"+m" = 1 ou 2, et
- au moins un composé, ou hydrolysat de celui-ci, de formule :

$$M''(Z'')_z \qquad (X)$$

dans laquelle M" désigne un métal ou un métalloïde, les groupes Z", identiques ou différents, sont des groupes hydrolysables et z, égal ou supérieur à 4, de préférence de 4 à 6 est la valence du métal ou métalloïde M", le ratio :

$$Rss = \frac{\text{masse de l' extrait sec théorique en composés IX dans la composition de couche supplémentaire}}{\text{masse de l' extrait sec théorique en composés X dans la composition de couche supplémentaire}}$$

étant inférieur ou égal à 2,3 et strictement inférieur au ratio Rs, la masse de l'extrait sec théorique en composés X représentant au moins 45 % de la masse de l'extrait sec de la composition de couche supplémentaire anti-abrasion et/ou anti-rayures et l'épaisseur de la couche supplémentaire anti-abrasion et/ou anti-rayures étant inférieure à celle de ladite couche supérieure.

**24.** Article selon la revendication 23, **caractérisé en ce que** Rss est inférieur ou égal à 2,0, mieux inférieur ou égal à 1,5, encore mieux inférieur ou égal à 1,25, et de façon optimale inférieur ou égal à 1,1.

**25.** Article selon la revendication 24, **caractérisé en ce que** Rss est supérieur ou égal à 0,85, mieux supérieur ou égal

à 0,9, encore mieux supérieur ou égal à 0,95.

**26.** Article selon l'une quelconque des revendications précédentes, **caractérisé en ce qu'**un revêtement anti-reflets est déposé sur le revêtement anti-abrasion et anti-rayures.

**27.** Article selon l'une quelconque des revendications précédentes, **caractérisé en ce qu'**il est une lentille optique, de préférence une lentille ophtalmique.

**28.** Procédé de fabrication d'un article d'optique résistant à l'abrasion et aux rayures comprenant un substrat, comprenant au moins les étapes suivantes :

a) fournir un article d'optique comprenant un substrat ayant au moins une surface principale;
b) déposer sur une surface principale du substrat une couche de composition de couche inférieure telle que définie dans l'une quelconque des revendications 1 à 21;
c) durcir au moins partiellement ladite composition de couche inférieure par voie thermique;
d) déposer sur la couche résultant de l'étape précédente une couche de composition de couche supérieure telle que définie dans l'une quelconque des revendications 1 à 21 ;
e) durcir ladite composition de couche supérieure par voie thermique;
f) récupérer un article d'optique comprenant un substrat ayant une surface principale revêtue d'un revêtement anti-abrasion et anti-rayures composé d'une couche inférieure adhérant à une couche supérieure.

**29.** Procédé selon la revendication 28, **caractérisé en ce que** la composition de couche inférieure est complètement durcie par voie thermique au cours de l'étape c) à une température allant de 80 à 150°C, pendant 30 minutes à 4 heures.

**30.** Procédé selon la revendication 28 ou 29, **caractérisé en ce que** la surface de l'article résultant de l'étape c) est soumise avant l'étape d) à un traitement de préparation de surface destiné à augmenter l'adhésion de la couche supérieure.

**31.** Procédé selon la revendication 30, **caractérisé en ce que** le traitement de préparation de surface est choisi parmi un bombardement avec les espèces énergétiques, de préférence un faisceau d'ions ou un faisceau d'électrons, un traitement par décharge corona, par effluvage, par UV, par plasma sous vide, un traitement acide ou basique et/ou par solvants, ou une combinaison de ces traitements, de préférence un traitement par une solution basique.

**32.** Procédé selon la revendication 28, **caractérisé en ce que** la composition de couche inférieure est partiellement durcie par voie thermique au cours de l'étape c) à une température allant de 70 à 120 °C, de préférence 80 à 120 °C, pendant 1 à 30 minutes, mieux 3 à 20 minutes et encore mieux 5-10 minutes et **en ce que** la surface de l'article résultant de l'étape c) n'est pas soumise avant l'étape d) à un traitement de préparation de surface.

## Claims

**1.** An optical article comprising a substrate havin at least one main surface coated with an abrasion- and scratch-resistant coating, said coatin being composed, startin from the substrate, of a lower layer and an upper layer that do witch each other, the upper layer being a layer of a cured upper layer composition and the lower layer being a layer of a cured lower layer composition,
**characterized in that** said upper layer composition comprises:

- at least one organosilane compound, or a hydrolyzate thereof, of formula:

$$R_nY_mSi(X)_{4-n-m} \qquad (I)$$

in which the R groups, being the same or different, are monovalent organic groups that are bound to silicon through a carbon atom and that contain at least one epoxy function, the X groups, being the same or different, are hydrolyzable groups, Y is a monovalent organic group bound to silicon through a carbon atom, n and m being integers such that n = 1 or 2 with n+m = 1 or 2, and
- at least one compound, or a hydrolyzate thereof, of formula:

$$M(Z)_x \qquad (II)$$

in which M represents a metal or a metalloid, the Z groups, being the same or different, are hydrolyzable groups and x, equal to or higher than 4, preferably from 4 to 6, is the metal or metalloid M valence, the ratio:

$$Rs = \frac{\text{theoretical dry matter weight of compounds I in the upper layer composition}}{\text{theoretical dry matter weight of compounds II in the upper layer composition}}$$

being lower than or equal to 2.3,

and wherein said lower layer composition comprises:

- at least one organosilane compound, or a hydrolyzate thereof, of formula:

$$R'_{n'}Y'_{m'}si(X')_{4-n'-m'} \qquad (III)$$

in which the R' groups, being the same or different, are monovalent organic groups that are bound to silicon through a carbon atom and that contain at least one epoxy function, the X' groups, being the same or different, are hydrolyzable groups, Y' is a monovalent organic group bound to silicon through a carbon atom, n' and m' being integers such that n' = 1 or 2 with n'+m' = 1 or 2, and
- optionally, at least one compound, or a hydrolyzate thereof, of formula:

$$M'(Z')_y \qquad (IV)$$

in which M' represents a metal or a metalloid, the Z' groups, being the same or different, are hydrolyzable groups and y, equal to or higher than 4, preferably from 4 to 6, is the metal or metalloid M' valence, the ratio:

$$Ri = \frac{\text{theoretical dry matter weight of compounds III in the lower layer composition}}{\text{theoretical dry matter weight of compounds IV in the lower layer composition}}$$

being higher than 2.3.

2. An article according to claim 1, **characterized in that** compound (II) is of formula $Si(Z)_4$, in which the Z groups, being the same or different, are hydrolyzable groups, and/or **characterized in that** compound (IV) is of formula $Si(Z')_4$, in which the Z' groups, being the same or different, are hydrolyzable groups.

3. An article according to claim 1 or 2, **characterized in that** Rs is lower than or equal to 2.0, preferably lower than or equal to 1.5, more preferably lower than or equal to 1.25, and even more preferably lower than or equal to 1.1, an higher than or equal to 0.85, more preferably higher than or equal to 0.9, even ore preferably higher than or equal to 0.95.

4. An article according to any one of the preceding claims, **characterized in that** Ri is higher than or equal to 3.0, preferably higher than or equal to 3.5, more preferably higher than or equal to 4.5, even more preferably higher than or equal to 10.

5. An article according to any one of the preceding claims, **characterized in that** the theoretical dry matter weight of compounds I represents from 30 to 60% of the upper layer composition dry matter weight, more preferably from 40 to 55%.

6. An article according to any one of the preceding claims, **characterized in that** the theoretical dry matter weight of compounds III represents more than 40% of the lower layer composition dry matter weight, more preferably more than 50%, even more preferably more than 60% and most preferably more than 65%.

7. An article according to any one of the preceding claims, **characterized in that** the theoretical dry matter weight of compounds IV represents less than 30% of the lower layer composition dry matter weight, more preferably less than 25%, even more preferably less than 20% and most preferably less than 1%.

**8.** An article according to any one of the preceding claims, **characterized in that** the thickness of the abrasion- and scratch-resistant coating does vary from 1 to 15 μm, preferably from 1 to 10 μm, more preferably from 2 to 8 μm, and even more preferably from 3 to 6 μm.

**9.** An article according to any one of the preceding claims, **characterized in that** the thickness ratio of the lower layer to the upper layer is higher than or equal to 1.5, more preferably higher than or equal to 2.0, and even more preferably higher than or equal to 3.0.

**10.** An article according to any one of the preceding claims, **characterized in that** the X, X', Z, Z' hydrolyzable groups are selected, independently from each other, from-O-$R^1$ alkoxy groups, wherein $R^1$ is a linear or branched, alkyl group, preferably a $C_1$-$C_4$ alkyl group, or an alkoxyalkyl group, -O-C(O)$R^3$ acyloxy groups, herein $R^3$ is an alkyl group, preferably a $C_1$-$C_6$ alkyl group, preferably a methyl or an ethyl group, halogens such as Cl and Br and amino groups optionally substituted by one or two alkyl or silane group(s).

**11.** An article according to any one of the preceding claims, **characterized in that** the Y or Y' groups are selected, independently from each other, from $C_1$-$C_4$ alkyl groups, alcenyl, $C_6$-$C_{10}$ aryl groups, methacryloxyalkyl, acryloxyalkyl, fluoroalkyl, perfluoroalkyl, (poly)fluoro alkoxy[(poly)alkylenoxy]alkyl and perfluoro alkoxy[(poly)alkylenoxy]alkyl groups.

**12.** An article according to any one of the preceding claims, **characterized in that** the R or R' groups are selected, independently from each other, from groups of formulas V and VI:

V 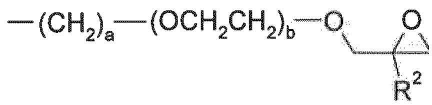

VI 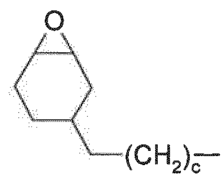

in which $R^2$ is an alkyl group, preferably a methyl group, or a hydrogen atom, a and c are integers ranging from 1 to 6, and b is 0, 1 or 2.

**13.** An article according to claim 12, **characterized in that** the R or R' groups are selected, independently from each other, from y-glycidoxypropyl, β-(3,4-epoxycyclohexyl)ethyl and γ-glycidoxyethoxypropyl groups, and preferably represent the γ- glycidoxypropyl group.

**14.** An article according to any one of the preceding claims, **characterized in that** compounds of formula and/or III are selected, independently from each other, from compounds of formulas VII and VIII:

VII 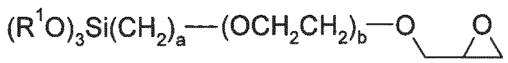

VIII 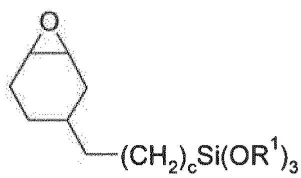

in hich $R^1$ is an alkyl moiety having from 1 to 6 carbon atoms, preferably a methyl or an ethyl moiety, a and c are integers ranging from 1 to 6, and b is 0, 1 or 2.

**15.** An article according to any one of the preceding claims, **characterized in that** compounds of formula II and/or IV are selected, independently from each other, from tetraalkoxysilanes, preferably from tetrathoxysilane, tetramethoxysilane, tetra(n-propoxy)silane, tetra(i-propoxy)silane, tetra(n-butoxy)silane, tetra(sec-butoxy)silane and tetra(t-butoxy)silane.

**16.** An article according to any one of the preceding claims, **characterized in that** the lower and/or upper layer compositions comprise at least one condensation catalyst and/or at least one curing catalyst.

**17.** An article according to claim 16, **characterized in that** the condensation catalyst is selected from acids or anhydrides of polyfunctional saturated or unsaturated acids, preferably from maleic acid, itaconic acid, trimellitic acid and trimellitic anhydride.

**18.** An article according to claim 16 or 17, **characterized in that** the curing catalyst is selected from imidazole derivatives and their imidazolium salts, N-cyanoguanidine, acetylacetone metallic salts of formula $M(CH_3COCHCOCH_3)_n$, wherein M is a metallic ion, preferably $n^{2+}$, $Co^{3+}$, $Fe^{3+}$ or $Gr^{3+}$, and n is an integer ranging from 1 to 3, ammonium tetrathiocyanatodiamine chromate(III), aluminium-based compounds, metal-based carboxylates such as zinc, titanium, zirconium, tin or magnesium, preferably zinc octoate or stannous octoate, iodonium salts and sulfonium salts.

**19.** An article according to claim 18, characterize in that the aluminium-based compound is selected from aluminium chelates, aluminium (III) acylates and alcoholates, preferably from aluminium acetylacetonate, aluminium ethylmono (acetoacetate) bisacetylacetonate, aluminium monoacetyl acetonate ethylbis(acetoacetate), di-n-butoxy aluminium ethyl mono(acetoacetate) and di-i-propoxy aluminium mono(ethylacetoacetate).

**20.** An article according to any one of claims 1 to 15, **characterized in that** the lower and/or upper layer compositions comprise a catalytic system composed of aluminium acetylacetonate or composed of a mixture of itaconic acid and *N*-cyanoguanidine.

**21.** An article according to any one of the preceding claims, **characterized in that** the lower and/or upper layer compositions comprise less than 10% by weight of fillers relative to the total weight of the composition, more preferably are free from any filler.

**22.** An article according to any one of the preceding claims, **characterized in that** it comprises, starting from the substrate, an impact-resistant primer layer witch said abrasion- and scratch-resistant coating, said primer layer preferably comprising colloidal fillers.

**23.** An article according to any one of the preceding claims, **characterized in that** it comprises a supplementary layer of an abrasion-resistant and/or scratch-resistant coating contacting said upper layer, said abrasion-resistant and/or scratch-resistant supplementary layer being a layer of cured supplementary abrasion-resistant and/or scratch-resistant layer composition, said supplementary layer composition comprising:

- at least one organosilane compound, or a hydrolyzate thereof, of formula:

$$R''_{n''}Y''_{m''}Si(X'')_{4-n''-m''} \qquad (IX)$$

in which the R" groups, being the same or different, are monovalent organic groups that are bound to silicon through a carbon atom and that contain at least one epoxy function, the X" groups, being the same or different, are hydrolyzable groups, Y" is a monovalent organic group bound to silicon through a carbon atom, n" and m" being integers such that n" = 1 or 2 with n"+m" = 1 or 2, and
- at least one compound, or hydrolyzate thereof, of formula:

$$M''(Z'')_z \qquad (X)$$

in which M" represents a metal or metalloid, the Z" groups, being the same or different, are hydrolyzable groups and z, equal to or higher than 4, preferably from 4 to 6, is the metal or metalloid M" valence, the ratio:

$$Rss = \frac{\text{theoretical dry matter weight of compounds IX in the supplementary layer composition}}{\text{theoretical dry matter weight of compounds X in the supplementary layer composition}}$$

being lower than or equal to 2.3 and strictly lower than ratio Rs, the theoretical dry matter weight of compounds X representing at least 45% of the dry atter weight of the supplementary abrasion-resistant and/or scratch-resistant layer composition and the thickness of the supplementary abrasion-resistant and/or scratch-resistant layer being lower than that of supper layer.

**24.** An article according to claim 23, **characterized in that** Rss is lower than or equal to 2.0, more preferably lower than or equal to 1.5, even more preferably lower than or equal to 1.25, and most preferably lower than or equal to 1.1.

**25.** An article according to claim 24, **characterized in that** Rss is higher than or equal to 0.85, more preferably higher than or equal to 0.9, even more preferably higher than or equal to 0.95.

**26.** An article according to any one of the preceding claims, **characterized in that** an antireflective coating is deposited onto the abrasion- and scratch-resistant coating.

**27.** An article according to any one of the preceding claims, further defined as being an optical lens, preferably an ophthalmic lens.

**28.** A method for making an abrasion- and scratch-resistant optical article comprising a substrate, comprising:

a) rovidin an optical article comprising a substrate having at least one main surface;
b) depositing onto a substrate main surface a layer of a lower layer composition such as defined in any one of claims 1 to 21;
c) at least partially curing said lower layer composition using a thermal process;
d) depositing onto the layer resulting from the previous step a layer of an upper layer composition such as defined in any one of claims 1 to 21;
e) curing said upper layer composition using a thermal process;
f) recovering an optical article comprising a substrate having a ain surface coated with an abrasion- and scratch-resistant coating composted of a lower layer adhering to an upper layer.

**29.** A method according to claim 28, **characterized in that** the lower layer composition is totally cured using a thermal process during step c) at a temperature ranging from 80 to 150 °C, for 30 minutes to 4 hours.

**30.** A method according to claim 28 or 29, **characterized in that** the surface, of the article resulting from step c) does undergo before step d) a surface preparation treatment intended to increase the adhesion of the upper layer.

**31.** A method according to claim 30, **characterized in that** the surface preparation treatment is selected from a bombardment with energetic species, preferably an ion beam or an electron beam, a corona discharge treatment, an ion spallation, an ultraviolet treatment, a plasma treatment under vacuum, an acidic or a basis treatment and/or a treatment with solvents, or any combination of treatment, preferably a basic solution treatment.

**32.** The method of claim 28, **characterized in that** the lower layer composition is partially cure using a thermal process during step c) at a temperature ranging from 70 to 120 °C, preferably from 80 to 120 °C, for 1 to 30 minutes, more preferably for 3 to 20 minutes and even more preferably for 5 to 10 minutes and herein the surface of the article resulting from step c) does not undergo before step d) any surface, preparation treatment.

## Patentansprüche

**1.** Optischer Gegenstand, umfassend ein Substrat mit mindestens einer Hauptfläche, die mit einer abrasions- und Beschichtung beschichtet ist, wobei die Beschichtung gebildet ist, ausgehend von dem Substrat, aus einer unteren Schicht und einer oberen Schicht, die aneinander haften, wobei die obere Schicht gehärtete Schicht aus einer obere-Schicht-Zusammensetzung ist und die untere Schicht eine gehärtete Schicht einer untere- Schicht-Zusammensetzung ist,
dadurch gekenntzeichnet, dass die obere-Schicht-Zusammensetzung umfasst:

- mindestens eine Organosilan-Verbindung oder ein Hydrolysat davon, der Formel:

$$R_nY_mSi(X)_{4-n-m} \qquad (I)$$

in welcher die Gruppen R, identisch oder unterschiedlich, organische monovalente Gruppen sind, die über ein Kohlenstoffatom an Silizium gebunden sind, und mindestens eine Epoxyfunktion enthalten, die Gruppen X, identisch oder unterschiedlich, hydrolysierbare Gruppen sind, Y eine organische monovalent Gruppe ist, die über ein Kohlenstoffatom an Silizium gebunden ist, n und m ganze Zahlen sind, so dass n = 1 oder 2 mit n+m = 1 oder 2, und
- mindestens eine Verbindung oder ein Hydrolysat davon, der Formel:

$$M(Z)_x \qquad (II)$$

in welcher M ein Metall oder ein Metalloid bezeichnet, die Gruppen Z, identisch oder unterschiedlich, hydrolysierbare Gruppen sind und x, gleich oder größer als 4, vorzugsweise von 4 bis 6, die Valenz des Metalls Metalloids M ist, wobei der Quotient:

$$Rs = \frac{\text{theoretische Masse der Trockensubstanz in den Verbindungen I in der obere - Schicht - Zusammensetzung}}{\text{theoretische Masse der Trockensubstanz in den Verbindungen II in der obere - Schicht - Zusammensetzung}}$$

kleiner oder gleich 2,3 ist,

und dadurch, dass die untere-Schicht-Zusammensetzung umfasst:

- mindestens eine Organosilan-Verbindung oder ein Hyrolysat davon, der Formel:

$$R'_{n'}Y'_{m'}Si(X')_{4-n'-m'} \qquad (III)$$

in welcher die Gruppen R', identisch oder unterschiedlich, organische monovalente Gruppen sind, die über ein Kohlenstoffatom an Silizium gebunden sind, und mindestens eine Epoxyfunktion enthalten, die Gruppen X', identisch oder unterschiedlich, hydrolysierbare Gruppen sind, Y' eine organische monovalente Gruppe ist, die über ein Kohlenstoffatom an Silizium gebunden ist, n' und m' ganze Zahlen sind, so dass n' = 1 oder 2 mit n' + m' = 1 oder 2, und
- optional mindestens Verbindung oder ein Hydrolysat davon, der Formel:

$$M'(Z')_y \qquad (IV)$$

in welcher M' ein Metall oder ein Metalloid bezeichnet, die Gruppen Z', identisch oder unterschiedlich, hydrolysierbare Gruppen sind und y, gleich oder größer als 4, vorzugsweise von 4 bis 6, die Valenz des Metalls oder Metalloids M' ist, wobei der Quotient,

$$Ri = \frac{\text{theoretische Masse der Trockensubstanz in den Verbindungen III in der untere - Schicht - Zusammensetzung}}{\text{theoretische Masse der Trockensubstanz in den Verbindungen IV in der untere - Schicht - Zusammensetzung}}$$

größer als 2,3 ist.

2. Gegenstand nach Anspruch 1, **dadurch gekennzeichnet, dass** die Verbindung (II) der Formel $Si(Z)_4$ genügt, in welcher die Gruppen Z, identisch oder unterschiedlich, hydrolysierbare Gruppen sind, und/oder dass die Verbindung (IV) der Formel $Si(Z')_4$genügt, in welcher die Gruppen Z', identisch oder unterschiedlich, hydrolysierbare Gruppen sind.

3. Gegenstand nach eine der vorhergehenden Ansprüche, **dadurch gekennzeichnet, dass** Rs kleiner oder gleich 2,0 ist, vorzugsweise kleiner oder gleich 1,5, besser kleiner oder gleich 1,25, und noch besser kleiner oder gleich 1,1, und größer oder gleich 0,85, besser größer oder gleich 0,9, noch besser größer oder gleich 0,95.

4. Gegenstand nach einem der vorhergehenden Ansprüche, **dadurch gekennzeichnet, dass** Ri größer oder gleich 3,0 ist, vorzugsweise größer oder gleich 3,5, besser größer oder gleich 4,5, noch besser größer oder gleich 10.

5. Gegenstand nach eine der vorhergehenden Ansprüche, **dadurch gekennzeichnet, dass** die theoretische der

Trockensubstanz in den Verbindungen I 30 bis 60 % der Masse der Trockensubstanz der obere-Schicht-Zusammensetzung bzw. der Zusammensetzung der oberen Schicht ausmacht, besser 40 bis 55 %.

**6.** Gegenstand nach einem der vorhergehenden Ansprüche, **dadurch gekennzeichnet, dass** die theoretische Masse der Trockensubstanz in den Verbindungen III mehr als 40 % der Masse der Trockensubstanz der untere-Schicht-Zusammensetzung bzw. der Zusammensetzung der unteren Schicht ausmacht, besser mehr als 50 %, noch besser mehr als 60 % und am meisten bevorzugt mehr als 65 %.

**7.** Gegenstand nach einem der vorhergehenden Ansprüche, **dadurch gekennzeichnet, dass** die theoretische Masse der Trockensubstanz in den Verbindungen IV weniger als 30 % der Masse der Trockensubstanz der untere-Schicht-Zusammensetzung ausmacht, besser weniger als 25 %, noch besser weniger als 20 % und am meisten bevorzugt weniger als 10 %.

**8.** Gegenstand nach einem der vorhergehenden Ansprüche, **dadurch gekennzeichnet, dass** die Dicke der abrasions- und kratzfesten Beschichtung von 1 bis 15 um variiert, vorzugsweise von 1 bis 10 μm, besser von 2 bis 8 μm und noch besser von 3 bis 6 μm.

**9.** Gegenstand nach einem der vorhergehenden Ansprüche, **dadurch gekennzeichnet, dass** der Quotient aus der Dicke der unteren Schicht und der Dicke der oberen Schicht größer oder gleich 1,5 ist, besser größer oder gleich 2,0 und noch besser größer oder gleich 3,0.

**10.** Gegenstand nach einem der vorhergehenden Ansprüche, **dadurch gekennzeichnet, dass** die hydrolysierbaren Gruppen X, X', Z, Z' ausgewählt sind, unabhängig voneinander, unter den Alkoxygruppen -O-$R^1$, wobei $R^1$ eine lineare oder verzweigte Alkylgruppe bezeichnet, vorzugsweise von $C_1$-$C_4$, oder eine Alkoxyalkylgruppe, den Acyloxygruppen-O-C(O)$R^3$, wobei $R^3$ eine Alkylgruppe ist, vorzugsweise von $C_1$-$C_6$, vorzugsweise Methyl oder Ethyl, den Halogenen, wie zum Beispiel Cl oder Br und den Aminogruppen, optional substituiert durch ein oder zwei Alkyl- oder Silangruppen.

**11.** Gegenstand nach einem der vorhergehenden Ansprüche, **dadurch gekennzeichnet, dass** die Gruppen Y oder Y' ausgewählt sind, unabhängig voneinander, unter den Alkylgruppen von $C_1$-$C_4$, Alkenyl, Aryl von $C_6$-$C_{10}$, Methacryloxyalkyl, Acryloxyalkyl, Fluoroalkyl, Perfluoroalkyl, (Poly)fluoroalkoxy[(poly)alkylenoxy]alkyl und Perfluoro-alkoxy[(poly)alkylenoxy]alkyl,

**12.** Gegenstand nach einem der vorhergehenden Ansprüche, **dadurch gekennzeichnet, dass** die Gruppen R oder R' ausgewählt sind, unabhängig voneinander, unter den Gruppen der Formeln V und VI:

V 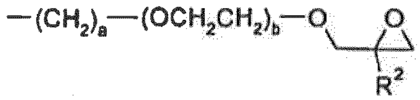

VI 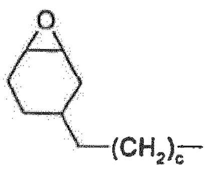

in welchen $R^2$ eine Alkylgruppe ist, vorzugsweise eine Methylgruppe oder ein Wasserstoffatom, a und c ganze Zahlen von 1 und 6 sind und b 0, 1 oder 2 repräsentiert.

**13.** Gegenstand nach Anspruch 12, **dadurch gekennzeichnet, dass** die Gruppen R oder R' ausgewählt sind, unabhängig voneinander, unter den Gruppen γ-Glycidoxypropyl, β-3,4-Epoxycyclohexyl)ethyl und γ-Glycidoxyethoxypropyl, und vorzugsweise die Gruppe γ-Glycidoxypropyl repräsentieren.

**14.** Gegenstand nach einem der vorhergehenden Ansprüche, **dadurch gekennzeichnet, dass** die Verbindungen der Formel I und/oder III ausgewählt sind, unabhängig voneinander, unter den Verbindungen der Formeln VII und VIII:

VII 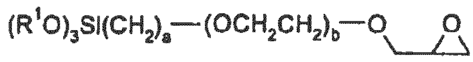

VIII 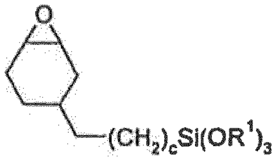

in welchen $R^1$ eine Alkylgruppe mit 1 bis 6 Kohlenstoffatomen ist, vorzugsweise ein Methyl- oder Ethyl-Verbund, a und c ganze Zahlen von 1 und 6 sind, und b 0, 1 oder 2 repräsentiert.

**15.** Gegenstand nach einem der vorhergehenden Ansprüche, **dadurch gekennzeichnet, dass** die Verbindungen der Formel II und/oder IV ausgewählt sind, unabhängig voreinander, unter den Tetraalkoxysilanen, vorzugsweise unter dem Tetraethoxysilan, dem Tetramethoxysilan, dem Tetra(n-propoxy)silan, dem Tetra(i-propoxy)silan, dem Tetra (n-butoxy)silan, dem Tetra(sec-butoxy)silan und dem Tetra(t-butoxy)silan.

**16.** Gegenstand nach einem der vorhergehenden Ansprüche, **dadurch gekennzeichnet, dass** die Zusammensetzungen der unteren und/oder oberen Schicht mindestens einen Kondensationskatalysator und/oder mindestens einen Härtungskatalysator umfassen.

**17.** Gegenstand nach Anspruch 16, **dadurch gekennzeichnet, dass** der Kondensationskatalysator ausgewählt ist unter den Säuren oder Anhydriden der gesättigten oder ungesättigten polyfunktionalen Säuren, vorzugsweise unter der Maleinsäure, der Itaconsäure, der Trimellithsäure, und dem Trimellithanhydrid.

**18.** Gegenstand nach Anspruch 16 oder 17, **dadurch gekennzeichnet, dass** der Härtungskatalysator ausgewählt ist unter den Imidazol-Derivaten und deren Imidazoliumsalzen, dem N-Cyanoguanidin, den metallischen Salzen von Acetylaceton der Formel $M(CH_3COCHCOCH_3)_n$, in welcher M ein metallisches Ion repräsentiert, vorzugsweise $Zn^{2+}$, $Co^{3+}$, $Fe^{3+}$ oder $Cr^{3+}$, und n eine ganze Zahl von 1 bis 3 ist, dem Ammonium-Tetrathiocyanatodiamminchromat (III), den Verbindungen auf Basis von Aluminium, den Carboxylaten von Metallen, wie zum Beispiel Zink, Titan, Zirkonium, Zinn oder Magnesium, vorzugsweise Zinkoctoat oder Zinnoctoat, den Iodoniumsalzen und den Sulfoniumsalzen.

**19.** Gegenstand nach Anspruch 18, **dadurch gekennzeichnet, dass** die Verbindung auf Basis von Aluminum ausgewählt ist unter den Aluminiumchelaten, den Acylaten und Alkoholaten von Aluminum (III), vorzugsweise unter dem Acetylacetonat von Aluminium, dem Bisacetylacetonat von Aluminum Monoethylacetoacetat, dem Monoacetylacetonat von Aluminum Bisethylacetoacetat, dem Di-n-butoxy Aluminum Monoethylacetoacetat und dem Di-i-Propoxy Aluminum Monoethlyacetoacetat.

**20.** Gegenstand nach einem der Ansprüche 1 bis 15, **dadurch gekennzeichnet, dass** die Zusammensetzung(en) der unteren und/oder oberen Schicht ein katalytisches System umfassen, gebildet aus Aluminiumacetylacetonat oder gebildet aus Itakonsäure und N-Cyanoguanidin.

**21.** Gegenstand nach einem der vorhergehenden Ansprüche, **dadurch gekennzeichnet, dass** die Zusammensetzungen) der unteren und/oder oberen Schicht weiniger als 10 % an Masse der Füllstoffe im Verhältnis zur Gesamtmasse der Zusammensetzung umfassen, enthalten sie keine Füllstoffe.

**22.** Gegenstand nach einem der vorhergehenden Ansprüche, **dadurch gekennzeichnet, dass** er umfasst, ausgehend vom Substrat, eine primäre schockresistente Schicht, die mit der abrasions- und kratzfesten Beschichtung beschichtet ist, wobei die primäre Schicht vorzugsweise kolloidale Füllstoffe umfasst.

**23.** Gegenstand nach einem der vorhergehenden Ansprüche, **dadurch gekennzeichnet, dass** er eine zusätzliche Schicht einer abrasions- und/oder kratzfesten Beschichtung in Kontakt mit der oberen Schicht umfasst, wobei die zusätzliche abrasions- und/oder kratzfeste Schicht eine gehärtete Schicht an zusätzlich-abrasions- und/oder kratzfest-Schicht-Zusammensetzung ist und wobei die Zusammensetzung der zusätzlichen Schicht bzw. die zusätzlich-abrasions- und/oder kratzfest-Schicht-Zusammensetzung umfasst:

- mindestens Organosilan-Verbindung oder ein Hydrolysat davon, der Formel:

$$R''_{n''}Y''_{m''}Si(X'')_{4-n''-m''} \qquad (IX)$$

in welcher die Gruppen R'', identisch oder unterschiedlich, organische monovalente Gruppen sind, die über ein Kohlenstoffatom an Silizium gebunden sind, und mindestens eine Epoxyfunktion enthalten, die Gruppen X'', identisch oder unterschiedlich, hydrolysierbare Gruppen sind, Y'' eine organische monovalente Gruppe ist, die über ein Kohlenstoffatom an Silizium gebunden ist, n'' und m'' ganze Zahlen sind, so dass n'' = 1 oder 2 mit n''+m'' = 1 oder 2, und
- mindestens eine Verbindung oder ein Hydrolysat davon, der Formel:

$$M''(Z'')_z \qquad (X)$$

in welcher M'' ein Metall oder ein Metalloid bezeichnet, die Gruppen Z'', identisch unterschiedlich, hydrolysierbare Gruppen sind und z, gleich oder größer als 4, vorzugsweise von 4 bis 6, die Valenz des Metalls oder Metalloids M'' ist, wobei der Quotient:

$$Rss = \frac{\text{theoretische Masse der Trockensubstanz in den Verbindungen IX in der Zusammensetzung der zusätzlichen Schicht}}{\text{theoretische Masse der Trockensubstanz in den Verbindungen X in der Zusammensetzung der zusätzlichen Schicht}}$$

kleiner oder gleich 2,3 ist und streng kleiner als der Quotient Rs ist, wobei die theoretische Masse der Trockensubstanz in den Verbindungen X mindestens 45 % der Masse der Trockensubstanz der Zusammensetzung der zusätzlichen abrasions- und/oder kratzfesten Schicht bzw. der zusätzlich-abrasions- und/oder kratzfestschicht-Zusammensetzung ausmacht und die Dicke der zusätzlichen abrasions- und/oder kratzfesten Schicht kleiner als die der oberen Schicht ist.

**24.** Gegenstand nach Anspruch 23, **dadurch gekennzeichnet, dass** Rss kleiner oder gleich 2,0 ist, besser kleiner oder gleich 1,5, noch besser kleiner oder gleich 1,25 und am bevorzugt kleiner oder gleich 1,1.

**25.** Gegenstand nach Anspruch 24, **dadurch gekennzeichnet, dass** Rss größer oder gleich 0,85 ist, besser größer oder gleich 0,9, noch besser größer oder gleich 0,95.

**26.** Gegenstand nach einem der vorhergehenden Ansprüche, **dadurch gekennzeichnet, dass** eine Anti-Reflex-Beschichtung auf die abrasions- und kratzfeste Beschichtung aufgebracht wird.

**27.** Gegenstand nach einem der vorhergehenden Ansprüche, **dadurch gekennzeichnet, dass** er eine optische Linse ist, vorzugsweise eine ophthalmische Linse.

**28.** Herstellungsverfahren eines optischen Gegenstandes, der gegenüber Abrasion und Kratzern resistent ist und ein Substrat umfasst, umfassend mindestens die folgenden Schritte:

a) Zur-Verfügung-Stellen eines optischen Gegenstandes umfassend ein Substrat mit mindestens einer Hauptoberfläche;
b) Ausbringen auf eine Hautoberfläche vom Substrat eine Schicht an untere-Schicht-Zusammensetzung bzw. an Zusammensetzung der unteren Schicht, so wie in einem der Ansprüche 1 bis 21 definiert;
c) mindestens teilweise Aushärten der untere-Schicht-Zusammensetzung durch ein thermisches Verfahren;
d) Ausbringen auf die Schicht, die aus dem vorhergehenden Schritt resultiert, eine Schicht an obere-Schicht-Zusammensetzung bzw. an Zusammensetzung der oberen Schicht, so wie in einem der Ansprüche 1 bis 21 definiert;
e) Aushärten der obere-Schicht-Zusammensetzung durch ein thermisches Verfahren;
f) Erhalten eines optischen Gegenstandes oder Artikels umfassend ein Substrat mit einer Hauptoberfläche, die mit einer abrasions- und kratzfesten Beschichtung beschichtet ist, hergestellt aus einer unteren Schicht, die an eine obere Schicht haftet.

**29.** Verfahren nach Anspruch 28, **dadurch gekennzeichnet, dass** die untere-Schicht-Zusammensetzung durch das thermische Verfähren im Verlauf von Schritt c) vollständig gehärtet wird bei einer Temperatur von 80 bis 150 °C, für 30 Minuten bis 4 Stunden.

**30.** Verfahren nach Anspruch 28 oder 29, **dadurch gekennzeichnet, dass** die Oberfläche des Artikels, der aus Schritt c) resultiert, vor Schritt d) einer Behandlung der Vorbereitung der Oberfläche unterworfen wird, mit dem Ziel der Verstärkung der Haftung der oberen Schicht.

**31.** Verfahren nach Anspruch 30, **dadurch gekennzeichnet, dass** die Behandlung der Vorbereitung der Oberfläche ausgewählt ist unter einer Beschießung mit energetischen Spezies, vorzugsweise eine Ionenstrahl oder einem Elektronenstrahl, einer Behandlung durch Koronaentladung, durch Spallation, durch UV, durch Plasma unter Vakuum, einer sauren oder basischen Behandlung und/oder mit Lösungsmitteln oder einer Kombination dieser Behandlungen, vorzugsweise einer Behandlung mit einer basischen Lösung.

**32.** Verfahren nach Anspruch 28, **dadurch gekennzeichnet, dass** die untere-Schicht-Zusammensetzung durch das thermische Verfahren im Verlauf von Schritt c) teilweise gehärtet wird bei einer Temperatur von 70 bis 120 °C, vorzugsweise 80 bis 120 °C, für 1 bis 30 Minuten, besser 3 bis 20 Minuten und noch besser 5 bis 10 Minuten und dass die Oberfläche des Artikels, der aus Schritt c) resultiert, nicht vor Schritt d) einer Behandlung der Vorbereitung der Oberfläche unterworfen wird.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- US 4211823 A
- US 5916669 A
- US 5254395 A
- US 5114783 A
- US 6808812 B
- FR 2721720
- FR 2734827
- JP 63141001 A
- JP 63087223 A
- US 5015523 A
- EP 0404111 A
- US 5316791 A
- EP 0680492 A
- EP 730168 A
- JP 11310755 B
- JP 200204301 B
- JP 2002363442 B
- FR 2702486
- WO 2007051841 A
- US 4294950 A
- EP 0614957 A
- FR 2858420
- US 5081192 A
- US 5763061 A
- US 6183872 B
- US 5739639 A
- US 5922787 A
- US 6337235 B
- US 6277485 B
- EP 0933377 A

### Littérature non-brevet citée dans la description

- Chemistry and Technology of the Epoxy Resins. Chapman Hall, 1993
- Epoxy Resins Chemistry and Technology. Marcel Dekker, 1988